(19) **Europäisches Patentamt / European Patent Office / Office européen des brevets**

(11) **EP 1 763 402 B1**

(12) **FASCICULE DE BREVET EUROPEEN**

(45) Date de publication et mention de la délivrance du brevet:
**30.11.2011 Bulletin 2011/48**

(21) Numéro de dépôt: **04745202.4**

(22) Date de dépôt: **08.07.2004**

(51) Int Cl.:
***B04B 5/12*** *(2006.01)*

(86) Numéro de dépôt international:
**PCT/IT2004/000377**

(87) Numéro de publication internationale:
**WO 2006/006186 (19.01.2006 Gazette 2006/03)**

(54) **SEPARATEUR CENTRIFUGE POUR SEPARER DES MELANGES DE FLUIDE A MILIEU LIQUIDE OU GAZEUX**

ZENTRIFUGALABSCHEIDER ZUM SCHEIDEN VON FLUIDMISCHUNGEN IN FLÜSSIGES ODER GASFÖRMIGES MEDIUM

CENTRIFUGAL SEPARATOR FOR SEPARATING FLUID MIXTURES IN LIQUID OR GAS MEDIUM

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(43) Date de publication de la demande:
**21.03.2007 Bulletin 2007/12**

(73) Titulaire: **DELLA CASA, Luigi Pietro**
**84030 Padula Scalo SA (IT)**

(72) Inventeur: **DELLA CASA, Luigi Pietro**
**84030 Padula Scalo SA (IT)**

(56) Documents cités:
**EP-A- 0 745 418      WO-A-2004/050255**
**DE-A1- 10 035 055      FR-A- 2 535 216**

## Description

L'invention, pour laquelle nous faisons cette demande de brevet international, sert à séparer, d'un mélange fluide qui coule d'un flux continu, les composants ayant une densité ou un poids moléculaire plus grands par rapport au milieu.

Puisqu'elle utilise pour ce but surtout la force centrifuge, on peut la classer dans la catégorie des séparateurs centrifuges.

ÉTAT DE LA TECHNIQUE

Les séparateurs centrifuges qui appartiennent à l'actuel état de la technique sont formés, essentiellement, par une chambre cylindrique, pivotante d'une haute vitesse, dans laquelle entre le mélange fluide à traiter. La rotation de la chambre se transmet au fluide et par suite, grâce à la force centrifuge, les composants à plus grande densité s'accumulent sur les parois du cylindre; le milieu liquide, à plus basse densité, sorte du cylindre.

Au moyen d'une cochlée le matériel accumulé est poussé hors de la chambre de centrifugation ; autrement il faut interrompre la rotation pour vidanger le séparateur.

Ces types de séparateurs centrifuges ne peuvent pas être employés sur des mélanges dont le milieu soit gazeux.

Il y a des séparateurs pour brouillards oléagineux qui emploient un filtre poreux pivotant dans une chambre. Ce type de séparateur utilise la force centrifuge seulement pour projeter l'huile, qui en passant dans les micro-canaux s'est condensé, contre la paroi de la chambre. Son usage est nécessairement limité aux brouillards.

Dans le document DE 100 35 055 A1 (INNOVA ENTWICKLUNGS) est décrit un séparateur qui, de même que le notre, possède une chambre de séparation annulaire.

Éléments distinctifs considérables qui distinguent le séparateur exposé dans le document DE 100 35 055 A1 de celui qui est l'objet de notre demande sont :

- la chambre annulaire (10) du susdit séparateur (DE 100 35 055) a la paroi externe fermée, de façon que il n'y a pas une communication directe entre elle et l'extérieur. Par suite le châssis (2), qui accueille le rotor, a seulement une fonction de support.
- l'entrée (22) du mélange à séparer est logée dans la partie intermédiaire de la chambre (10) ; de tel façon, grâce à la forme en tronçon de cône de cette chambre, les fluides à plus petite densité resteraient en haut pour être expulsés par les conduites (25).
- La chambre (10) est formée en tronçon de cône puisque, grâce aux différents rayons de rotation entre le versant haut et les bas, s'engendre un gradient de force centrifuge qui consentirait la séparation: les composantes à plus grande densité se cumulent dans la zone à plus grand rayon en poussant vers le versant haut, avec rayon plus petit, les composantes à plus petite densité.

Ces importantes caractéristiques, ne concordent pas avec celles du notre séparateur et ces différences comportent, comme il est après exprimé, des différences essentielles dans les potentialités du séparateur, présenté par nous, par rapport à celui du document DE 100 35 055 A1 (INNOVA ENTWICKLUNGS), (voir page 12 ligne 26- 35 de la description de notre séparateur).

Dans le document WO 2004/050255 A2 est décrit un séparateur pour gaz.

- Le rotor à double paroi (3) présente, précisément, la surface externe complètement fermée.
- Ceci et l'absence d'une chambre d'accumulation directe (des canaux de flux (6)) empêchent, d'une façonne absolue, l'usage de ce séparateur pour des mélanges contenant particules solides ou semi-solides (en dispersion gazeuse ou liquide).

Dans ce cas se vérifierait une rapide obstruction des canaux de flux (6) et des voies de décharge (9) et (13). -Le système avec un seuil de séparation (8) en sortie du rotor (3) comporte que variations du pourcentage des gaz à densités différentes produisent la contamination, en sortie, d'un gaz par l'autre.

DESCRIPTION DE L'INVENTION

Ce séparateur peut être employé soit sur des mélanges fluides à milieu liquide, soit sur des mélanges fluides à milieu gazeux.

Il est formé par plusieurs composants dont quelques-uns peuvent, selon les cas, spécialement dans l'usage sur mélanges à milieu gazeux, n'être pas utilisés.

Ce séparateur est constitué par les structures suivantes :

    1) Corps conteneur
    2) Rotor
    3) Système de contrôle

CORPS CONTENEUR (1), qui est constitué par :

    4) Tuyau d'entrée
    5) Tuyau de décharge
    6) Collecteur d'entrée
    7) Collecteur de sortie
    8) Pompe de sortie (superflue dans l'usage sur mélanges à m. gazeux, sauf la capsule qui est substituée par un collecteur de décharge (8 bis)).
    9) Joint avec axe (superflu dans l'usage sur mélanges à m. gazeux).
    10) Roulements à billes (superflus dans l'usage sur mélanges à m. gazeux).
    11) Tube axial d'entrée

12) Tube axial de sortie
13) Chambre d'accumulation
14) Roulement à billes
15) Axe de transmission
16) Joint
17) Lame polisseuse
18) Axe
19) Roue dentée grande
20) Roue dentée petite
21) Roulements à billes
22) Poulie
23) Bouchon

Le <u>collecteur de sortie</u> (7) comprend :

24) Palettes de sortie
25) Calotte
26) Support
27) Pivot

<u>ROTOR</u> (2), qui est constitué par :

28) Couvercle supérieur
29) Couvercle inférieur
30) Chambre d'entrée
31) Chambre de séparation
32) Chambre de sortie
33) Chambre diaphragme
34) Grille (elle peut n'être pas indispensable spécialement dans l'usage sur mélanges à m. gazeux).

La <u>chambre d'entrée</u> (30) comprend :

35) Palettes d'entrée

La <u>chambre de séparation</u> (31) comprend :

36) Palettes de séparation

La <u>chambre diaphragme</u> (33) comprend:

37) Roulement a billes
38) Paroi supérieure
39) Paroi inférieure
40) Paroi tubulaire

La <u>grille</u> (34) comprend :

41) Cellules de récolte
42) Trous

<u>SYSTÈME DE CONTRÔLE</u> (3), qui est constitué par :

43) Diaphragme électromécanique d'entrée (ou une soupape mécanique d'entrée)
44) Diaphragme électromécanique de sortie (ou une soupape mécanique de sortie)

45) Électrovanne pour le compresseur
46) Électrovanne pour la décharge du gaz
47) Électrovanne pour la décharge du liquide
48) Capteur de pression
49) Capteur de niveau du liquide
50) Circuit électronique de contrôle (non représenté dans les dessins)
51) Compresseur pour gaz (non représenté dans les dessins)
52) Réservoir (non représenté dans les dessins)

(Les nombres, qui sont à la gauche des composants, correspondent à ceux -là employés dans les figures et utilisés souvent, dans le texte, à droit du nom des composants).

<u>Corps conteneur</u> (1):

C'est une structure fermée qui peut être de forme variée, mais nous, pour clarté descriptive, la considérons cylindrique.

L'entrée et la décharge du séparateur sont assurées par le tuyau d'entrée (4) et le tuyau de décharge (5). Des deux l'un est fixé, excentriquement, sur une des surfaces planes, l'autre, excentriquement, sur la surface opposée. Ils communiquent respectivement avec le collecteur d'entrée (6) et avec la capsule de la pompe de sortie (8) qui devient, dans l'usage sur mélanges gazeux, un collecteur de décharge (8 bis).

Le collecteur d'entrée (6) continue par un court tube axial d'entrée (11) autour duquel tourne le rotor (2). Dans l'épaisseur de la surface plane, sur laquelle est fixé le tuyau d'entrée (4), est logé, au centre, un roulement à billes (14), étanche, pour l'axe (15) de la transmission mécanique du rotor (2).

Le collecteur de sortie (7) est constitué par un certain nombre de palettes (24), fixées en étoile sur un support (26) en forme de couronne circulaire.

Elles ont leur axe perpendiculaire à celui de rotation du rotor (2) penché, par rapport au sens de rotation du rotor, en arrière; de façon qu'il forme, avec un rayon idéal passant pour son extrémité la plus interne, un certain angle ; elles en outre sont, sur l'axe susdit, légèrement courbes avec convexité antérieure.

Ceci pour faciliter la rentrée du fluide vers le centre, où commence le tube axial de sortie (12).

La surface supérieure du collecteur de sortie (7) est revêtue par une fine calotte (25). Au sommet de cette calotte (25) est fixé, dirigé vers l'haut, un pivot (27) qui s'insère dans le roulement à billes (37) de la chambre diaphragme (33).

Le collecteur de sortie (7) est logé dans la chambre de sortie (32) du rotor (2).

Le rotor (2) tourne autour du collecteur de sortie (7) et du tube axial de sortie (12).

Le tube axial de sortie (12) dessert le collecteur de sortie (7) et la capsule de la pompe de sortie (8) ou le collecteur de décharge (8 bis) (si la pompe (8) n'est pas employée).

La pompe de sortie (8) est une pompe centrifuge qui est logée après le tube axial de sortie (12), dans l'épaisseur de la paroi sur laquelle est fixé le tuyau de décharge (5). Elle est activée par un joint avec un axe (9) qui passe à travers deux roulements à billes (10) étanches. Sa traction pourra dépendre, par un apte rapport de transmission, du même moteur du séparateur ou d'un moteur indépendant.

L'important est que son débit et le gradient de pression engendrés soient régulés de façon que la pression en amont de la chambre de séparation (31) soit, en valeur scalaire, égale à la dépression en aval de cette chambre.

Tout l'espace qui reste dans le corps conteneur (1) est représenté par la chambre d'accumulation (13).

Cette chambre (13) communique directement, seulement, au moyen des trous (42), avec les cellules de récolte (41) de la grille (34) et, par celles-ci, avec la chambre de séparation (31) du rotor (2). Dans le cas où la grille (34) ne serait pas employée, la chambre (13) communique, directement, seulement avec la chambre de séparation (31).

Dans la chambre d'accumulation (13) il y a, en haut, une ouverture pour une électrovanne (46) communicant avec l'extérieur, une deuxième ouverture pour une électrovanne (45) communicant avec un compresseur (non représenté dans les dessins).

Une troisième électrovanne (47), près du fond, apte aux liquides, dessert la chambre de accumulation (13) et un réservoir (non représenté dans les dessins).

La pompe de sortie (8) est pratiquement inutile dans l'usage du séparateur sur les fluides gazeux.

Rotor (2)

Il est constitué par :

Chambre d'entrée (30)

Cette chambre a la forme d'un tronçon de cône (ou de coupe) avec la grande base dirigée en haut ; le bord extérieur est coupé verticalement, de manière qu'il se forme une ouverture à ceinture.

La chambre (30) est délimitée en bas par la paroi supérieure (38) de la chambre diaphragme (33), en haut par le couvercle supérieur (28). Dans le centre du couvercle supérieur (28) il y a un trou dans lequel est logé le tube axial d'entrée (11), autour duquel le couvercle (28), fixé au rotor (2), tourne. Cette jointure mobile est étanche. Le tube axial d'entrée (11) dessert la chambre d'entrée (30) et le collecteur d'entrée (6). La surface externe de la chambre d'entrée (30), à ceinture, est ouverte, de sorte qu'elle communique avec la chambre de séparation (31). L'aire de section (la lumière) du tube axial d'entrée (11) et l'aire de la susdite ouverture à ceinture devront correspondre. Dans cette chambre (30) il y a nombreuses palettes (35) disposées en étoile, et penchées de la même façon que les palettes (24) du collecteur de sortie (7), elles sont légèrement courbes et avec la concavité en avant. Leur bord supérieur et inférieur, adhèrent respectivement au couvercle supérieur (28) et à la paroi supérieure (38) de la chambre diaphragme (33).Leur extrémité interne se trouve un peu extérieurement au trou central, l'externe là où commence la chambre de séparation (31).

Chambre de séparation (31)

C'est un espace dont la section transversale est en forme de couronne circulaire.

Les deux diamètres de la couronne restent les mêmes le long de toute la chambre (31).

Sa surface courbe (tubulaire) interne est ouverte, en haut et en bas, par deux fenêtres à ceinture circulaire qui permettent la communication de cet espace avec la chambre d'entrée (30) et celle de sortie (32). En haut et en bas, elle est délimitée, respectivement, par le couvercle supérieur (28) et l'inférieur (29) qui, en se courbant en arc d'un angle de 90 degrés, la revêtent, sur sa surface externe, sur toute la hauteur correspondant aux ouvertures à ceinture qui permettent la communication de cette chambre (31) avec la chambre d'entrée (30) et celle de sortie (32). Les bords de ce revêtement, obtenu par les deux couvercles (28)(29), correspondent aux niveaux de la limite supérieure et de l'inférieure de la paroi tubulaire (40) de la chambre diaphragme(33). La surface externe de la chambre (31) est, sauf les traits correspondant aux communications avec la chambre d'entré et celle de sortie, découverte ; même si, le cas échéant, elle pourra être revêtue par la grille (34). Dans la chambre de séparation (31) sont logées un certain nombre de palettes de séparation (36) rectangulaires (ou quadrangulaires), disposées par intervalles réguliers et en étoile, avec un axe parallèle à l'axe de rotation du rotor (2), et l'autre, perpendiculaire à l'axe de rotation, penché, par rapport au sens de rotation, en arrière ; en créant, avec le rayon du plane de rotation qui passe pour sa extrémité interne, un angle de 45-60 degrés, environ. Elles sont légèrement courbes sur l'axe perpendiculaire à celui de rotation, avec la convexité orientée en avant, avec un angle au centre de 20° environ.

Les bords des palettes de séparation (36) adhèrent, en haut, au couvercle supérieur (28) et, en bas, à l'inférieur (29). Intérieurement ils adhèrent à la paroi tubulaire (40) de la chambre diaphragme (33) ; extérieurement ils sont, en haut et en bas, nous l'avons dit, sur les segments correspondent à la fenêtre de communication avec la chambre d'entrée (30) et à celle-là avec la cambre de sortie (32), couverts par le couvercle supérieur (28) et l'inférieur (29).

La partie qui reste ou continue par les parois longitudinales des cellules de récolte (41) de la grille (34) ou, dans le cas où la grille ne serait pas utilisée, elle est découverte.

Leur nombre devra être compatible avec la grossièreté des composants du mélange fluide, en pouvant se produire un engorgement des espaces entre leur.

Pour exemple, pour une chambre de séparation (31) avec un rayon interne de 8 cm et l'externe de 9 cm, leur nombre pourra varier, selon les caractéristiques des composants à extraire du fluide et selon la viscosité du milieu, entre 8 et 380 environ.

Dans le cas d'un fluide à milieu gazeux où le frottement est petit, il convient d'employer beaucoup de palettes de séparation (36).

Dans le cas d'un mélange avec un milieu liquide très dense, si on emploie la grille (34) et celle-ci est dotée de cellules de récolte (41), il peut convenir d'employer un petit nombre de ces palettes (36), même seulement deux.

Cependant, en réduisant le nombre des palettes de séparation (36), on réduit aussi le compactage des composants à plus grande densité. (Voir ensuite).

Chambre de sortie (32)

C'est une cavité égale à celle de la chambre d'entrée (30), mais orientée au contraire.

Sa hauteur sera plus petite que celle de la chambre d'entrée (30), proportionnellement à la réduction du volume du fluide après le procédé de séparation. En haut elle est délimitée par la paroi inférieure (39) de la chambre diaphragme (33). Dans le centre du couvercle inférieur (29), qui la délimite et la ferme en bas, il y a un trou dans lequel est inséré le tube axial de sortie (12), autour duquel le couvercle (29), fixé au rotor (2), tourne. Cette jointure mobile est étanche.

Dans cette chambre (32) est logé le collecteur de sortie (7) qui continue par le tube axial de sortie (12). L'espace entre le collecteur de sortie (7) et les parois de la chambre de sortie (32) est presque virtuel, le rotor (2) pouvant tourner, autour de lui, sans frottement.

Chambre diaphragme (33)

Il s'agit d'un espace délimité par deux tronçons de cône creux (ou de coupe) orientés au contraire, avec leurs grandes bases liées par une structure tubulaire et les petites dirigées l'une vers l'autre.

Nous distinguons, pour commodité descriptive, une paroi tubulaire (40), une paroi supérieure (38) et une paroi inférieure (39). La paroi tubulaire (40) constitue aussi la paroi interne de la chambre de séparation (31) ; la supérieure (38) et l'inférieure (39), nous l'avons dit, constituent respectivement aussi la paroi inférieure de la chambre d'entrée (30) et la supérieure de la chambre de sortie (32). La hauteur des tronçons de cône dépendra des débits, d'entrée et de sortie, nécessaires.

Cette chambre (33) est complètement fermée. Au centre de sa paroi inférieure, sur le versant supérieur, est fixé un roulement à billes (37) étanche dans lequel, à travers un trou, pénètre le pivot (27) de la calotte (25) du collecteur de sortie (7).

Grille (34)

Il s'agit d'une structure tubulaire qui revêt toute la paroi externe découverte de la chambre de séparation (31).

Dans son épaisseur sont creusés des canaux, dont la direction est parallèle à l'axe de rotation ; ils continuent, vers l'extérieur, les canaux qui se trouvent entre les palettes de séparation (36). Leurs parois latérales, longitudinales, sont une continuation des palettes de séparation (36).

Ces canaux, qui sont en nombre égal à celui des palettes de séparation (36), sont formés de manière que leur section transversale soit à demi-cercle ou à demi ellipse ou à arc de cercle, et orientée avec le versant courbe vers l'extérieur. Le versant interne des canaux est complètement découvert et dessert les canaux formés par les palettes de séparation (36) et les canaux de la grille (34).

Ces canaux sont subdivisés par des parois très fines, disposées perpendiculairement à l'axe de rotation, formant, de cette manière, les cellules de récolte (41).

La paroi externe de chaque cellule (41) est, selon le cas, complètement ouverte, dans l'usage sur les fluides gazeux, ou percée par des trous (42) circulaires, dans l'usage sur les fluides liquides.

Ces trous (42) circulaires, dans l'usage sur les mélanges à milieu liquide, doivent avoir un diamètre non supérieur à une certaine limite qui varie d'une façon proportionnelle à la tension superficielle du milieu liquide et à la densité totale du mélange. Pour des basses densités totales du mélange, si le milieu est l'eau, ce diamètre ne doit pas dépasser 8 mm, environ.

Le passage de la cavité de la cellule (41) au trou (42) doit être galbé de façon à éliminer les arêtes, en évitant, de cette façon, d'empêcher le glissement des particules compactées.

La paroi externe de la grille (34) a, préférablement, la section transversale à forme polygonale, avec un nombre de côtés égal à celui des canaux de la grille (et des files de cellules de récolte (41)), de façon que la sortie des trous (42) corresponde à une surface plane. Entre les marges des trous (42) adjacents il faut, préférablement, une épaisseur de quelque décimillimètre.

En haut la grille (34) est fermée par le couvercle supérieur (28), en bas par l'inférieur (29).

Couvercle supérieur (28)

Cette structure, à petite épaisseur, revêt de dessus, sans solution de continuité et d'une façon étanche, la chambre d'entrée (30) et celle de séparation (31), en suivant la chambre de séparation (31) sur la ceinture externe, au niveau de la communication avec la chambre d'entrée (30) ; en outre il ferme, en haut, la grille (34).

Dans son trou central, éventuellement muni d'une garniture en matériel apte, pénètre le tube axial d'entrée (11).

## Couvercle inférieur (29)

Il est, pratiquement, identique à celui supérieure (28) sauf qu'il revêt de dessous la chambre de sortie (32), celle de séparation (31) et la grille (34); la portion à ceinture qui revêt la paroi externe de la chambre de séparation (31), s'il faut, sera plus courte. Dans son trou central, éventuellement muni d'une garniture en matériel apte, pénètre le tube axial de sortie (12).

Grâce aux trous centraux des ces deux couvercles (28)(29), ceux-ci, avec le rotor (2) auquel ils sont fixés, peuvent tourner autour des deux tubes axiaux(11)(12), qui sont immobiles.

Système de contrôle (3)(non indiqué singulièrement dans les dessins) Son utilité peut être, dans l'usage sur mélanges à milieu gazeux, dans quelque cas, limitée.

Il est représenté par : un diaphragme électromécanique d'entrée (43) (ou une soupape mécanique d'entrée), un diaphragme électromécanique de sortie (44) (ou une soupape à pression d'ouverture réglable, dans le cas d'un fluide liquide, ou une semple soupape mécanique de sortie ,si le mélange est à milieu gazeux), un capteur de pression (48), un détecteur de niveau du liquide (49), trois électrovannes (45)(46)(47), un compresseur pour gaz (51)(non représenté), un circuit électronique de contrôle (50) (non représenté), un réservoir (52) (non représenté). Dans l'usage sur mélanges à milieu gazeux peuvent n'être pas utiles surtout : le compresseur et sa électrovanne (45).

Le diaphragme électromécanique d'entrée (ou la soupape d'entrée) est logée en amont du collecteur d'entrée (6). Le diaphragme électromécanique de sortie (43) (ou la soupape de sortie) est inséré en aval de la pompe de sortie (8) ou, lorsqu'elle n'est pas présente, en aval du collecteur de décharge (8 bis).

Le diaphragme électromécanique est constitué, essentiellement, par un disque basculant sur un axe médian. Ce disque, grâce à un ressort, par la rentrée d'un arrêt spécial, se pose parallèlement au flux, en le laissant couler. Le retour à la position de fermeture est obtenu par un petit moteur électrique.

La soupape de sortie, dans l'usage sur mélanges liquides, doit être avec la pression d'ouverture réglable. Des trois électrovannes (45)(46)(47) deux sont aptes aux gaz(45)(46) et sont installées dans la paroi de la chambre d'accumulation (13), en haut Des deux l'une (45) communique avec un compresseur pour gaz, l'autre (46) avec l'extérieur. La troisième (47) est apte aux liquides denses et est logée dans la paroi de la chambre de récolte (13), en bas. Elle dessert la chambre d'accumulation (13) et un réservoir (non représenté dans les dessins). S'il faut, une pompe axiale facilitera le flux des liquides très denses. Les cas échéant pourrons être utiles aussi un turbidimètre et un densimètre.

## Fonctionnement

Les palettes d'entrée (35), en tournant, produisent la force centrifuge qui détermine la propulsion du fluide. Grâce à cette poussée le fluide passe dans la chambre de séparation (31).

Dans le cas où le séparateur serait alimenté par une pompe ou existerait, en amont, une poussée externe, les deux poussées, naturellement, s'additionneront.

On pourra limiter la vitesse du flux en limitant l'ouverture du diaphragme électromécanique d'entrée (43) ou d'un robinet d'entrée.

La fermeture de la surface externe de la chambre de séparation (31), au niveau de la chambre d'entrée (30) et sur une hauteur qui corresponde à l'ouverture à ceinture qui les dessert, empêche au fluide d'atteindre directement la chambre d'accumulation (13), en provocant par contre une déviation et une poussée le long des canaux entre les palettes de séparation (36).

La rotation du fluide, parvenu dans la partie non couverte par le couvercle supérieur (28) de la chambre de séparation (31), engendrerait, grâce à la force centrifuge, le passage du fluide dans les cellules de récolte (41) de la grille (34) et, ensuite, dans la chambre de accumulation (13).

Tel mouvement du fluide, dans le cas des mélanges à milieu liquide, doit être limité pour éviter l'inondation de la chambre d'accumulation (13) et, par suite, la réduction de la vitesse angulaire du pivotement du rotor. Ce phénomène est évité par la présence, dans la chambre d'accumulation (13), d'une pression gazeuse obtenue préventivement au moyen du compresseur, activé par le circuit électronique du système de contrôle(3). Cette pression serait égale à l'addition de la force centrifuge, par laquelle le fluide est poussée dans la chambre d'accumulation (13), plus la pression qui dérive de la résistance au flux du fluide vers l'extérieur du séparateur.

Le juste fonctionnement de la pompe de sortie (8) neutralise la résistance au flux du fluide, à travers le déchargement, vers l'extérieur du séparateur et en outre il neutralise, par une apte régulation, le gradient de pression entre le niveau haut et celui-là bas de la chambre (31), engendré par la force de gravité.

Par suite, la pression par laquelle le fluide est poussé lorsqu'il se trouve dans la chambre de séparation (31), vers celle d'accumulation (13), dépendra seulement de la force centrifuge qui se forme dans la chambre de séparation (31). L'utilité de cette pompe (8), dans l'usage sur mélanges à milieu gazeux, est relative. Dans le cas des mélanges à milieu gazeux, le problème d'une inondation de la chambre d'accumulation (13), causée par le milieu du mélange, n'existe pas.

La présence de la grille (34) est indispensable, dans l'usage sur mélanges à milieu liquide, pour éviter que l'air compressé dans la chambre d'accumulation (13) puisse forcer la couche la plus externe du liquide présent dans la chambre de séparation (31), en pénétrant dans les couches liquides à valeurs plus petites de pression, en échappant, de cette façon, de la chambre d'accumulation (13), qui serait envahie par le liquide. Ceci se vérifie si la surface liquide, en contact direct avec celle-là gazeuse, ou n'a pas forme circulaire ou, bien que circulaire, est trop large; se formant, de cette manière, en considérant une surface circulaire, un ménisque liquide trop lourd au centre. Ce ménisque engendre une dépression qui facilite la pénétration, dans le liquide, de l'air compressé de la chambre d'accumulation (13).

De ce phénomène dérive l'exigence d'entourer la surface de contact entre la chambre de séparation (31) et celle de accumulation (13) par une paroi tubulaire percée par nombreux trous (42), régulièrement circulaires; de 8 mm de diamètre, environ, dans le cas d'un milieu aqueux et pour basses densités totales du mélange. Un court (le 1%, environ, du diamètre du trou) canal circulaire, entre le trou (42) et la cellule de récolte (41), permettra une meilleure stabilisation de la surface livre du liquide.

La subdivision transversale des canaux de la grille en cellules de récolte (41) sert à limiter les turbulences dues au frottement entre le fluide qui coule le long de la chambre de séparation (31) et celui-là, presque immobile, qu'il y a dans la grille (34).

La grille (34) élimine aussi le frottement entre le fluide de la chambre de séparation (31) et celui de la chambre d'accumulation (13), en réduisant les turbulences résultant.

Les turbulences peuvent engendrer un retour de composantes à haute densité dans la chambre de séparation (31), surtout dans chambres de séparation (31) avec un « espace critique » (différence entre le rayon interne et l'externe) très petit.

Cette limitation des turbulences rende utile la grille (34) dans l'usage soit sur fluides liquides soit sur les gazeux.

Le cellules de récolte (41) permettent aussi que les composants à plus grande densité s'accumulent, ils formant, ainsi, un corps à plus grande masse qui, poussé par une force centrifuge suffisamment élevée, peut être expulsé dans la chambre de accumulation (13).

Dans l'usage sur mélanges à milieu gazeux, il est possible d'utiliser une grille (34) avec des trous (42) à fente ou de laisser découverte une ceinture de la surface livre de la partie supérieure de la chambre de séparation (31).

Enfin, il est possible de ne pas employer la grille (34), spécialement, mais pas seulement, pour mélanges à milieu gazeux.

Nous décrirons particulièrement, mais pas seulement, la manière par laquelle procède un mélange à milieu liquide; phénomène qui est plus complexe:

Le gaz présent entre les palettes de séparation (36) est poussé vers la chambre d'accumulation (13) ; par suite, la pression gazeuse sera, dans ces espaces, plus petite que dans la chambre d'accumulation (13). Pour ce fait le mélange sera poussé vers la sortie de la chambre de séparation (31).

Lorsqu'il arrive dans le collecteur de sortie (7), il n'y ayant plus la possibilité de remplacer le gaz en le poussant dans la chambre d'accumulation (13) et la décharge étant fermée par le diaphragme de sortie (44), s'engendra une brusque augmentation de la pression dans le fluide et, par suite, l'entrée du fluide dans la chambre d'accumulation (13) et, donc, un rapide accroissement de la pression gazeuse et du volume du liquide.

Ce phénomène, grâce au système de contrôle (3) (capteur de pression (48), détecteur de niveau du liquide (49), circuit électronique (50)), provoquera l'ouverture rapide du diaphragme électromécanique de sortie (44), ou simplement l'ouverture d'une soupape avec pression d'ouverture réglée opportunément, et, par suite, la réduction de la résistance dans les voies de décharge à des valeurs proches de la pression atmosphérique. Le fluide bougera vers la sortie du séparateur.

La fermeture du diaphragme électromécanique (44), jusqu'à l'arrivée du fluide au seuil du collecteur de sortie (7), est indispensable, dans le cas d'un fluide liquide. Ceci sert à éviter que l'air, comprimé dans la chambre d'accumulation (13), puisse échapper à travers le collecteur de sortie (7) vers l'extérieur, ce fait permettant au fluide d'envahir la chambre d'accumulation (13) et d'empêcher ou de réduire, par sa viscosité, le pivotement du rotor (2).

Ce problème ne se pose pas pour un mélange à milieu gazeux.

La fermeture du diaphragme d'entrée (43) empêche que le gaz, comprimé dans la chambre d'accumulation (13), puisse, à la fin du cycle, remonter à travers les voies d'admission, ce fait laissant pénétrer du liquide (dans l'usage sur liquides) dans la chambre d'accumulation (13).

La fermeture de la décharge en aval de la chambre de séparation (31), à la fin du cycle, sert à éviter la sortie, de la chambre d'accumulation (13)au dehors du séparateur, du gaz compressé dans cette chambre (13). Dans le cas d'un fluide gazeux, le deux diaphragmes (43) (44) ou plus simplement les deux soupapes, en se fermant à la fin du cycle, éviteront la dispersion de particules à l'extérieur.

La pompe de sortie (8),utile dans le cas de mélange à milieu liquide, sert à éviter que ,entre la partie initiale de la chambre de séparation (31) et la finale, s'engendre un gradient, même si petit, de pression.

Ceci évitera des pertes de gaz de la chambre d'accumulation (13) à travers la portion finale de la chambre de séparation (31), et de fluide de la portion initial de cette chambre (31) dans celle de accumulation (13).

Il faudra, nous l'avons dit, projeter et régler la pompe de sortie (8) de façon qu'elle produise le même débit et la même poussée que ceux qui existent à l'entrée de la chambre de séparation (31).

Grâce au système de contrôle (3) on peut éviter que le milieu liquide du mélange envahisse la chambre d'accumulation (13) et, ainsi, on obtient que le rotor (2) pivote, sans obstacles, avec des vitesses même très élevées.

Ce système (3), grâce au compresseur (51), permette de compenser les éventuelles petites pertes d'air de la chambre d'accumulation (13) à travers les jointures pivotantes étanches.

Lorsque la pression dans la chambre (13) devient excessive, à cause de l'accumulation des particules, le système de contrôle (3) engendre une sortie de gaz, de façon à reconduire la pression à la valeur nécessaire pour éviter l'entrée du milieu (liquide) dans la chambre d'accumulation (13), mais non suffisante pour empêcher l'expulsion des composants à plus grande densité.

Grâce à ce système (3), le matériel accumulé dans la chambre d'accumulation (13), lorsque il parvient à un certain niveau, peut être poussé dans un réservoir.

Enfin au moyen de ce système (3), dans l'usage sur fluides liquides, on peut régler la pression dans la chambre d'accumulation (13), de façon à contrarier, par une force plus ou moins grande, l'expulsion des agrégats hors des cellules (41) et, par suite, obtenir un matériel d'extraction plus ou moins dense.

Pendant le passage dans la chambre d'entrée (30) le fluide se repart entre les palettes d'entrée (35). En offrant, les composants à plus haute densité, une plus grande résistance à l'accélération, ils bougeront d'un mouvement relative, par rapport au milieu fluide qui les contient et, spécialement si l'espace entre les palettes d'entrée (35) est suffisamment limité, ce phénomène engendre le compactage des composants à plus grande densité contre la palette qui les suit dans le mouvement de rotation.

Il se forme, donc, une lamine de mélange à plus grande densité ; elle s'étendra le long de la palette en acquérant, progressivement, une masse élevée et un front de pénétration réduit. La masse accroisse la force centrifuge, un petit front de pénétration facilite la vitesse du mouvement à travers le milieu fluide. Ce phénomène de compactage donc facilitera, dans la chambre de séparation (31), le mouvement des composants à plus grande densité vers celle d'accumulation (13) et donc leur expulsion.

Le fluide, ainsi modifié, entre dans la chambre de séparation (31).

Dans le cas où la grille (34) ne serait pas utilisée, la force centrifuge, dans la chambre de séparation (31), pousse les composantes à plus grande densité directement dans la chambre d'accumulation (13) ; si la grille (34) est employée, la force centrifuge les pousse dans les cellules de récolte (41) de la grille (34) et d'ici vers la chambre d'accumulation (13).

La distance que ces composants devront parcourir, correspondant à la différence entre le grand rayon et le petit de la chambre de séparation (31), nous l'appellerons « espace critique ».

Ce mouvement est limité de la viscosité du milieu fluide et facilité, nous l'avons dit, d'un rapport masse-front d'avancement, du corps à haute densité, élevé.

Évidemment, plus l'espace critique à parcourir sera bref et le flux du fluide le long des canaux entre les palettes de séparation (36) sera lent, plus grand pourra être, à égalité de densité, le rayon de particules sphériques, ou plus petit le rapport masse-front d'avancement des agrégats laminaires.

Ces composants s'accumulent dans les cellules de récolte (41), en remplaçant le milieu liquide et en parvenant à la sortie des trous (42). Puisque ils sont poussés par une force plus grande que la pression existant dans la chambre de accumulation (13), force qui devient encor plus grande pour la condensation qui se vérifie dans les cellules de récolte (41), ils sortent de la grille (34) pour entrer dans la chambre d'accumulation (13).

Les composants à plus grande densité, expulsés dans la chambre d'accumulation (13), se déposeront dans elle. Puisqu'il est possible que les composants expulsés s'accumulent sur la paroi courbe de la chambre d'accumulation (13), en y adhérant, ils seront enlevés par une lame (17) qui, grâce à des engrenages (19)(20) avec un apte rapport de transmission, tourne plus lentement que le rotor (2).

Nous considérerons les avantages de certaines solutions techniques qui caractérisent ce séparateur : A) La chambre de séparation (31), avec section transversale à couronne circulaire, présente, par rapport à une chambre cylindrique, l'avantage d'avoir un « espace critique » qui peut être très petit, jusqu'à l'ordre des micron; en même temps elle peut avoir, par un accroissement égal et adéquat des deux rayons, le débit désiré. Pour « espace critique », nous considérons celui que le corps à séparer du milieu fluide doit parcourir pour sortir hors du flux qui le reconduirait, non séparé, au dehors du séparateur, et donc dans ce appareil, nous l'avons dit, la différence entre le rayon externe et l'interne de la section à couronne circulaire de la chambre de séparation (31). B) Ce type de chambre de séparation (31) permette d'avoir un rayon de rotation très grand, sans comporter une augmentation proportionnelle du « espace critique » et, par suite, d'obtenir une force centrifuge proportionnellement élevée.

Bien qu'avec des vitesses angulaires élevées, l'épaisseur du fluide étant limitée, la pression qui dérive de la force centrifuge sera limitée ; pour ce fait il y aura une étanchéité adéquate des jointures pivotantes.

C) L'extraction, et donc la séparation définitive des composants à plus grande densité, n'est pas confiée à une cochlée, mais elle se vérifie directement par l'expulsion de ces composants dans la chambre d'accumulation. Cela fait en sorte que les particules à plus grande densité par rapport à un moyen gazeuse soient séparées de lui avant sa sortie de la chambre de séparation, nous pouvant obtenir ,donc, un moyen fluide complètement privé de ces particules.

Celui-ci représente un important élément de distinction d'autres séparateurs centrifuges es.: DE 100 35 055 A1 (INNOVA ENTWICKLUNGS) ou WO 2004/050255 A2 dans lesquels il n'y a pas la possibilité de séparer d'un moyen fluide des particules solides (ou hémi-solides), mais seulement d'obtenir la séparation de deux fluides à différente densité.

Les particules solides qui se séparassent d'un moyen fluide, dans les brevets susmentionnés, ne pourraient pas s'écouler ; car elles engorgeraient les voies de sortie. Cela arriverait et si le moyen soit gazeux et s'il soit liquide. D) La rotation du fluide n'est pas confiée à son frottement avec les parois de la chambre de séparation (31) et, par suite, plus rapide pour les couches avec un contact plus direct avec ces parois, que pour celles-là plus lointaines. La présence des palettes de séparation (36) assure une poussée uniforme à toutes les couches de fluide et, en même temps, elles continuent à compacter les composants à plus grande densité en facilitant leur expulsion.

Les palettes de séparation (36) permettent d'employer ce séparateur aussi sur mélanges à milieu gazeux, puisqu'elles engendrent une poussée et une rotation uniforme de toutes ses couches.

E) La grille (34) permet l'usage de ce séparateur, avec des vitesses angulaires très élevées, aussi sur mélanges à milieu liquide et limite en outre les turbulences, soit qu'elle soit employée sur mélanges à milieu liquide, soit que le milieu soit gazeux.

F) Les palettes d'entrée (35) pas seulement provoquent la propulsion mais modifient aussi la distribution des composants du mélange, en concentrant les composants à plus grande densité et en formant une couche à grande masse et à petit front de pénétration, qui plus rapidement peut être expulsé.

G) Pareillement à tous les séparateurs centrifuges, mais avec la particularité que celui-ci peut être utilisé aussi sur mélanges à milieu gazeux, il ne faut pas changer aucun filtre.

## DESCRIPTION DES DESSINS

N.B.: Pour indiquer des cavités ou des espaces ont été employées des flèches.

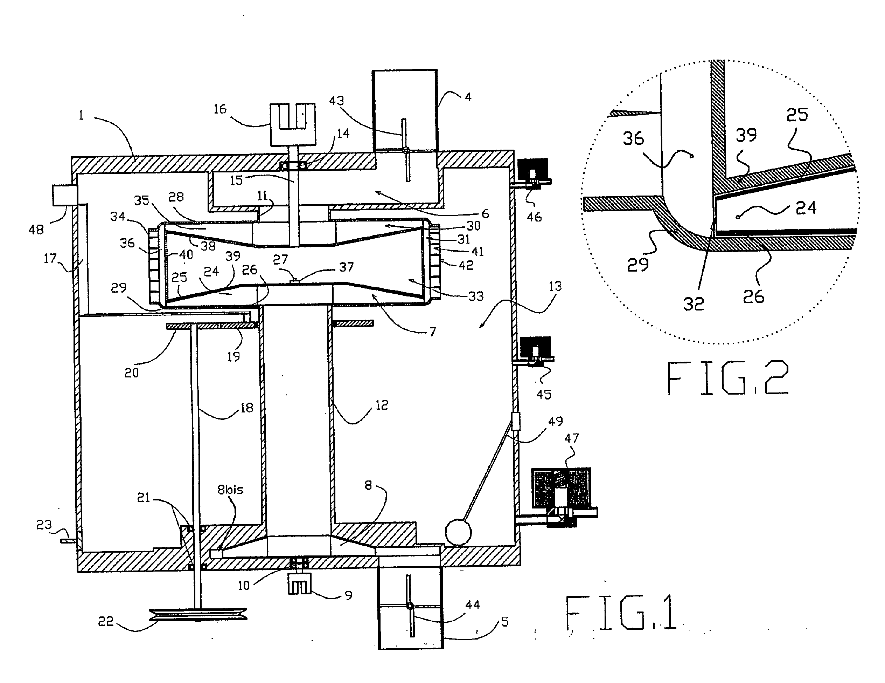

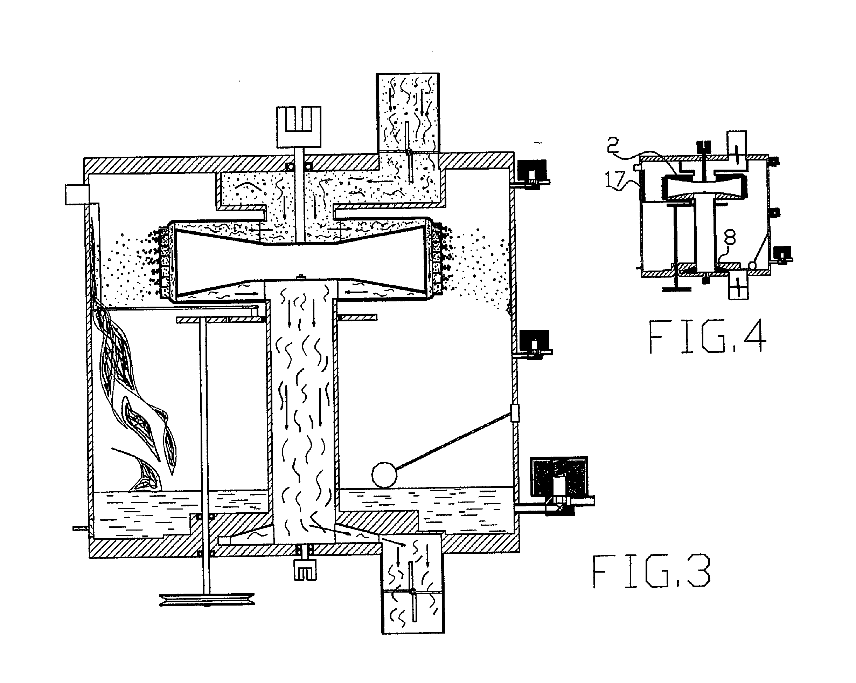

Les figures en axonométrie sont, par rapport aux fig. 1 et 3, à une échelle légèrement réduite (-10,14%), sauf

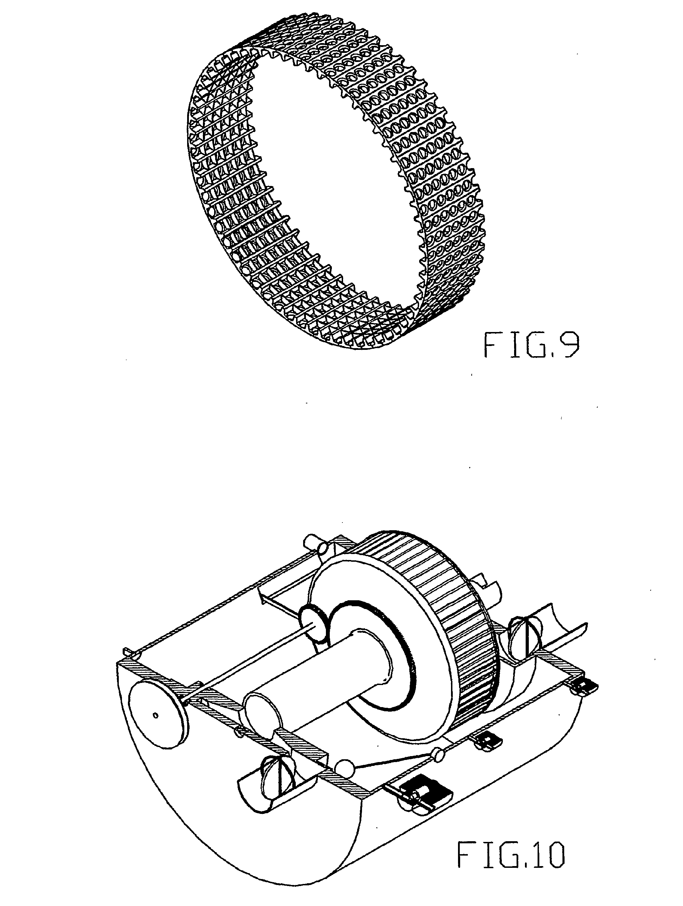

la figure 9 qui est augmentée (+6,53%).

Figure 1 (feuille 1/5)

Dans cette figure est représentée une section longitudinale du séparateur avec l'indication et le numérotage de tous ses composants, sauf la chambre de sortie (32).

Figure 2 (feuille 1/5)

Dans cette figure est représenté un détail du séparateur, par lequel on mette en évidence le collecteur de sortie (7) avec ses composants (calotte (25), support (26), palettes (24)) et l'espace presque virtuel (chambre de sortie (32)) qui le sépare du rotor (2).

Figure 3 (feuille 2/5)

Dans cette figure est représentée une section longitudinale du séparateur avec la reproduction du fonctionnement.

Figure 4 (feuille 2/5)

Dans cette figure est représentée, d'une façon schématique et à une échelle très réduite, une section longitudinale du séparateur.

Les parties en noire, numérotées, représentent les composants dotés de mouvement rotatoire.

Figure 5 (feuille 3/5)

Dans cette figure est représentée une vue de dessus, en axonométrie orthogonal isométrique, avec section longitudinale du corps conteneur (1).

Figure 6 (feuille 3/5)

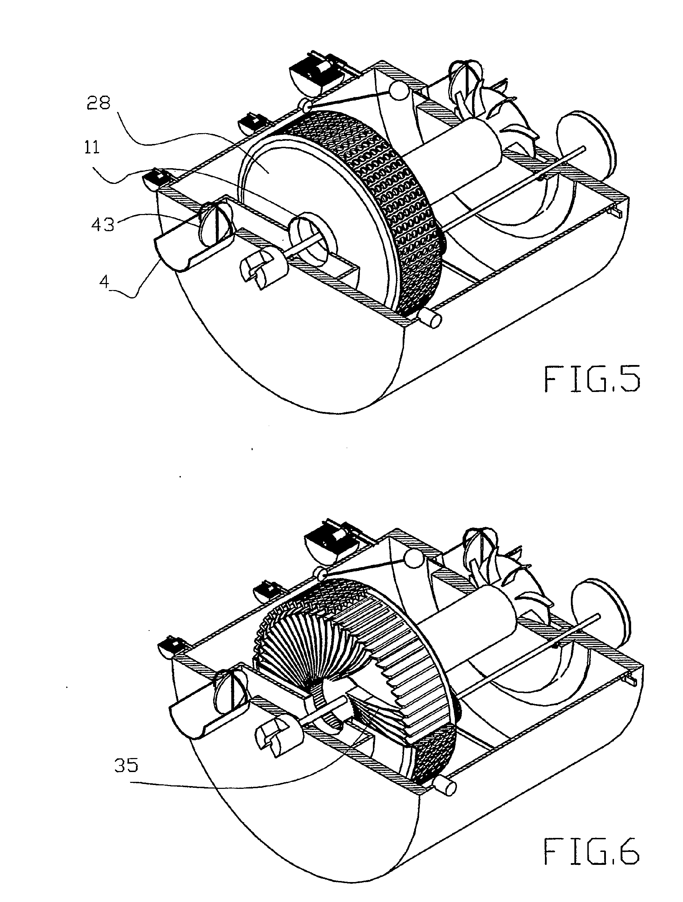

Dans cette figure est représentée la même vue que la figure 5, mais aussi avec la section longitudinale du couvercle supérieur (28), du tube axial d'entrée (11) et une hémisection de la grille (34).Quelques palettes d'entrée (35) ont été emportées pour mettre mieux en évidence leurs rapports.

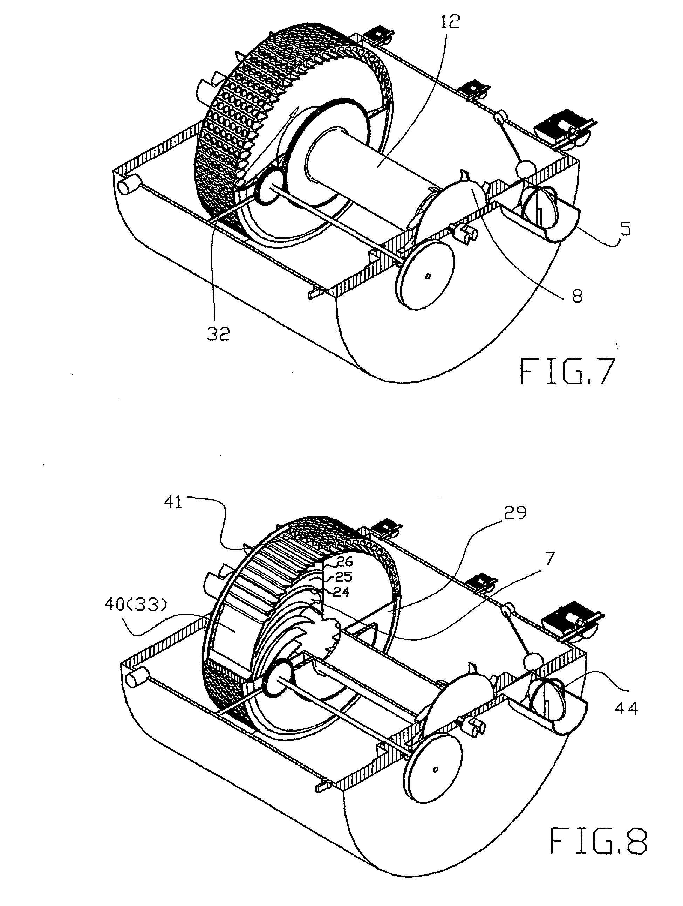

Figure 7 ( feuille 4/5)

Dans cette figure est représentée une vue de dessous, en axonométrie orthogonal isométrique, avec section longitudinale du corps conteneur (1), du couvercle inférieur (29), du collecteur de sortie (7) ; de façon à laisser vide et visible une moitié de la chambre de sortie (32).

Figure 8 ( feuille 4/5)

Dans cette figure est représentée la même vue que la figure 7, mais aussi avec la section longitudinale du tube axial de sortie (12) et d'un engrenage (19) ; sans la section longitudinale du collecteur de sortie (7), sauf que de son support (26). Il y a aussi une hémisection de la grille (34) et ont été emportées des palettes de séparation (36) pour mettre mieux en évidence leurs rapports.

Figure 9 ( feuille 5/5)

Dans cette figure est représentée une vue en axonométrie de la grille (34).

Figure 10 ( feuille 5/5)

Cette figure illustre le séparateur sans la grille (34) et la pompe de sortie (8).

## MÉTHODE POUR LA RÉALISATION DU SÉPARATEUR :

Les éléments principaux qui conditionnent le projet d'un séparateur sont :

• Le débit du fluide à traiter.
• La viscosité du milieu.
• Les dimensions des composants à densité plus élevée.
• La densité des composants à extraire.

Les ÉLÉMENTS STRUCTURELS VARIABLES PRINCIPAUX dans le séparateur, qui est l'objet de cette demande, sont trois :

## 1) CHAMBRE DE SÉPARATION (31).

Caractérisée par : A) <u>Espace critique</u> : qui est, pour nous, la différence entre le rayon externe et l'interne de la chambre de séparation (31).

Cet espace, nous l'avons dit, peut être très réduit et, en désirant conserver le débit nécessaire, on pourra augmenter les deux rayons de la chambre de séparation (31).

Ceci portera, en même temps, deux avantages :

1er. Se réduira l'espace que les composants doivent parcourir, ils traversant le milieu fluide, pour être expulsés.

2e. L'augmentation du rayon de rotation engendra un accroissement proportionnel de la force centrifuge qui les pousse, à travers le milieu fluide, vers la chambre d'accumulation (13).

Pour ces deux phénomènes, on obtiendra un temps de traversée du « espace critique » convenablement limité. B) La <u>longueur utile</u> de la chambre de séparation (31) : Représentée par la longueur de cette partie-là, de la surface externe de la chambre de séparation (31), qui n'est pas couverte par les deux couvercle (28) (29). C) Le <u>rayon interne</u> de la chambre de séparation (31).

On peut considérer ce que suit :

Le vecteur centrifuge est, dans sa valeur scalaire, proportionnel à la masse (et donc au produit de la densité par le volume ou, dans le cas de substances en solution ou de gaz, au poids moléculaire).

La vitesse qu'ont les composants à plus grande densité, ils bougeant vers les cellules de récolte (41), devra être telle qu'ils puissent les atteindre avant d'arriver au point dans lequel le fluide commence à dévier pour entrer dans le collecteur de sortie (7). Dans ce point le vecteur de poussée commence à s'opposer à celui-là centrifuge et peut le réduire ou le neutraliser.

De ce fait dérive l'utilité d'une chambre de séparation (31) avec une aire de section transversale suffisamment ample, avec un espace critique limité et une longueur opportune ; de façon à obtenir une réduction de la vitesse du flux dans ce secteur et un passage dans les cellules de récolte, le plus rapide possible, et en ayant disponible un temps suffisamment long.

On peut, en tenant constantes les composantes structurales du séparateur, évaluer, selon le débit du flux dans le tuyau d'apport, un « temps utile » qui est le temps disponible afin que une particule, avec des caractéristiques déterminées, traverse l'espace que nous avons appelé « espace critique ».

En connaissant le débit (quantité) volumique qv, en le divisant par la section transversale de la chambre de séparation (31) Acs, nous obtiendrons la Vitesse moyenne du flux dans la chambre de séparation (31) Vm*cs*.

$$qv/A\textit{cs}=Vm\textit{cs}$$

En connaissant la longueur de la chambre de séparation (31) L*cs*, soustraites les longueurs des aires à surface externe couverte par les couvercles (28) (29), nous obtiendrons la « longueur utile » L*ucs*. Or, nous pourrons calculer le temps nécessaire pour la parcourir : temps utile Tu

$$L\textit{ucs}/Vm\textit{cs}= Tu$$

En ayant, donc, établi l'Espace Critique Ec., et le Temps Utile Tu. ; nous pourrons obtenir la vitesse que devra avoir une particule pour être « séquestrée » dans les cellules de récolte (41) de la grille (34), (ou pour être expulsée directement dans la chambre de accumulation (13)).

$$V= Ec/Tu$$

Où Ec est le « espace critique » et Tu est le « temps utile ».

Nous pourrons tirer le nombre de tours-minute nécessaire (fréquence de rotation) pour obtenir cette vitesse, par le raisonnement suivant :

Les autres variables à considérer sont :

Le coefficient de viscosité du milieu (en relation à la température) : η en Cp (centpoise)
Le rayon des particules : r
Leur densité : p

Nous avons dit vouloir initialement laisser constants les paramètres structuraux (lesquels, naturellement, il faudra changer selon les performances et les dimensions qu'on désire).

Ils sont :

Le rayon interne de la chambre de séparation : Rics
Le rayon externe de la même chambre : Recs
Le rayon moyen de la même chambre : RMcs
La longueur utile de la même chambre : Lu
La différence entre Recs et Rics, ($\Delta$R), que nous avons appelée Espace critique :Ec Établie l'aire de section que nous voulons qu'ait la chambre de séparation et l'espace critique, nous pourrons connaître la valeur des rayons en appliquant la formule suivante :

$$R= [(\Delta R^2{}^*\pi+A) / (\Delta R^*\pi)] /2$$

Où R est le rayon externe de la chambre de séparation Recs et A est l'aire de section de la chambre de séparation A*cs*

$\Delta R$ est l'espace critique.

La force centrifuge étant

$$Fc= 4^*\pi^2{}^*m^*R/T^2$$

Où m est la masse du corps tournant sur lequel s'applique la force centrifuge,

R est le rayon du plan de rotation autour du quel tourne le corps

T la période de rotation

Étant la formule de Stokes qui calcule (pour les vitesses de l'ordre qui nous intéresse) la vitesse V la plus grande que puisse atteindre un corps sphérique à rayon r, poussé par une force F, en équilibre avec une résistance égale à elle, engendrée par la viscosité, du milieu dans lequel se vérifie ce mouvement, dont le coefficient est $\eta$ (en centpoise, cP) :

$$V= F / (6^*\pi^*r^*\eta)$$

Il sera :

$$V = [(4^*\pi^2{}^*m^*R)/ T^2] / (6^*\pi^*r^*\eta)$$

Où T est la période

T=1/ts

(ts = tours second)

D'où, étant (en considérant les particules presque sphériques)

$$m= \rho^* \pi^*r^3{}^*4/3$$

Où p est la densité des particules.

En considérant le rayon moyen, entre celui-là externe et l'interne, de la chambre de séparation, il sera :

$$V(cm/s)= ( \pi^2{}^*r^3{}^*\rho^*RM^*tm^2) / (4050^*\eta)$$

Où V est la vitesse d'une particule sphérique, avec rayon r et masse m, qui bouge à travers un milieu avec un coefficient de viscosité p, vers l'extérieur d'une chambre de séparation ayant le rayon moyen RM ; chambre qui pivote avec une fréquence de rotation t*m* (tours minutes).

D'où nous pourrons tirer les tours minutes nécessaires.

$$tm= \quad \sqrt{} [(V^*4050^*\eta) / (\pi^2{}^*r^2{}^*\rho^*RM)]$$

ou aussi, en établissant les t*m*, obtenir le rayon moyen qu'il faut donner à la chambre de séparation.

$$RM = (V^*4050^*\eta) / (\pi^2{}^*r^2{}^*\rho^*tm^2)$$

Ce calcul se rapporte à particules sphériques et isolées. Mais, nous l'avons dit, en réalité, si se vérifie un compactage des particules dans la chambre d'entrée (30), celles-ci arrivent à la chambre de séparation (31) compactées en forme d'agrégats à masse plus grande que celle d'une particule isolée et avec un rapport masse-front d'avancement beaucoup plus grand que celui des particules primitives. Ceci augmente ultérieurement la vitesse d'expulsion.

## 2) PALETTES DE LA CHAMBRE DE SÉPARATION (36)

Ces palettes (36), nous l'avons dit, servent à garantir que la vitesse angulaire du fluide soit la même que celle du rotor (2) et que toutes les couches, de l'extérieur à l'intérieur, aient la même vitesse angulaire.

En outre, entre elles continue le compactage qui était commencé entre les palettes d'entrée (35).

Pour une distribution uniforme des composants à expulser et de la force centrifuge, il faut que les palettes de séparation (36) soient en nombre suffisamment élevé et égal, à celui des palettes d'entrée (35) et à celui des files longitudinales des cellules (41) de la grille (34).

Dans l'usage sans la grille (34) il faut suivre les considérations suivantes:

Pour éviter que le fluide, comprimé contre la face antérieure, tende à rentrer derrière la palette, où il peut s'engendrer une dépression ; il faut un juste nombre de palettes (36).

Approximativement le vecteur de poussée, perpendiculaire au rayon du plan de rotation et produit par la partie la plus interne d'une palette, doit être en direction du bord externe de la palette qui la précède dans le sens de rotation.

Á égalité de nombre de palettes (36), d'angle d'inclinaison des palettes (36) et de rayon interne de la couronne circulaire ; ceci se vérifie d'une façon proportionnelle à la différence entre le rayon externe et l'interne de la couronne circulaire correspondant à la section transversal de la chambre de séparation (31). Espace que nous avons appelé « espace critique ».

Donc, en maintenant constants le rayon interne de la chambre de séparation (31) et l'inclinaison des palettes (36); plus petit sera l'espace critique, plus grand devra être le nombre des palettes (36).

Après qu'on a défini: le rayon interne de la chambre de séparation (31), l'inclinaison des palettes (36), l'espace critique ;le point d'intersection dudit vecteur de poussée, avec le rayon externe de la couronne, correspondra à l'extrémité externe de la palette qui précède. En divisant 360 par l'angle existant entre points correspondants de deux palettes consécutives et avec le sommet sur l'axe de rotation, nous aurons le nombre le plus petit qu'il faut, pour des fluides liquides, de palettes (36).Ceci spécialement dans le cas où on n'emploierait pas la grille (34).

Dans le cas où le fluide serait gazeux, puisqu'un fluide gazeux est compressible, il faudra que la direction de ce vecteur de poussée passe par un point de la palette, d'autant plus interne que plus grand, à égalité de rayon, soit la vélocité angulaire.

Les palettes (36) devront être inclinées, de façon que leur axe transversal forme, avec le rayon passant par leur bord interne, un angle de 45-60 degrés. Préférablement elles seront un peu courbes sur l'axe transversal (avec un angle au centre de 20° environ) et avec la convexité en avant.

Ces deux détails sont nécessaires pour neutraliser le frottement qui se produit, par l'effet de la force de réaction à l'accélération, sur les composantes à plus grande densité ; en créant, en même temps, une ultérieure poussée vers l'extérieur.

Ces effets sont obtenus par la décomposition de la force de réaction à l'accélération, due au progressif accroissement du rayon de rotation, dans une composante vectorielle, perpendiculaire à l'axe transversal du plan de la palette et une, à lui parallèle qui, précisément, s'oppose à la force de frottement.

Cette force-ci dépendra du spécifique coefficient de frottement et de l'angle, entre la force de réaction à l'accélération et l'axe transversal de la palette. Il conviendra, donc, d'employer, pour les palettes de séparation (36) et d'entrée (35), un matériel avec un petit coefficient de frottement.

Pour un usage sur liquides très denses, il est possible de réduire le nombre des palettes de séparation jusqu'à n'en employer que deux (ou même de ne les employer pas du tout), mais dans ces cas, il faudra employer, obligatoirement, la grille (34).

3) PALETTES D'ENTRÉE (35)

Dans les canaux qui se trouvent entre les palettes d'entrée (35) commence, nous l'avons dit, le compactage des particules, de façon à faciliter leur expulsion. Plus petit est l'espace entre ces palettes (35), plus complètement se vérifie ce compactage ; donc, un grand nombre de ces palettes facilite le procédé de séparation. Cependant, on doit considérer la possibilité d'un engorgement de ces canaux.

En autre, il faut observer que une plus grande longueur du rayon de la chambre d'entrée et, donc, de ses palettes (35) et du rayon interne de la chambre de séparation (31), en produisant une plus grande vitesse du mouvement circulaire, engendre l'accélération qui permette le compactage.

Une légère courbure à concavité antérieure peut être utile pour ralentir le glissement des composants à plus grande densité, ceci facilitant leur compactage.

Préférablement les palettes d'entrée (35) termineront là où commencent celles-là de séparation (36) de façon que les agrégats puissent glisser de la surface antérieure des premières à celle des deuxièmes.

Cas particuliers :

- Dans l'usage sur fluides contenant des composants trop grossiers, il faudra triturer, avant l'entrée dans le séparateur, ces composants.

- Dans le cas où ce séparateur serait employé pour extraire des vapeurs d'un mélange fluide à milieu gazeux qui soient à haute température (pour exemple : gaz de décharge dérivés de combustion) ; il faudra, en amont du séparateur, pré réfrigérer ce fluide en évitant, de cette façon, le surchauffage du séparateur. De cette manière on condensera la vapeur et évitera qu'elle, après sa capture, puisse retourner dans la forme moléculaire, qui, en ayant une masse plus petite que l'azote moléculaire, ne pourrait pas être capturée, si l'azote, ou un autre gaz à plus grande masse, est présent, même par des vitesses angulaires très élevées.

- Pour l'extraction de particules très petites (liquides ou solides) mélangées avec des gaz, la séparation peut être facilitée en enrichissant le mélange à milieu gazeux (fume, brouillard) à traiter, par une émulsion de liquide laquelle, après avoir capturé les particules, sera extraite plus facilement.

- Par la méthode susdite on pourra capturer aussi des gaz qui réagissent sélectivement avec des substances en solution dans le liquide émulsionné.

APPLICABILITÉ INDUSTRIELLE :

Ce séparateur peut être utilisé pour la séparation en flux continu de mélanges avec milieu liquide et, donc, pour tous les usages qui déjà actuellement sont faites des séparateurs centrifuges :

Pour le travail de plusieurs produits ou substances ; par exemple : produits fromagers ; jus de fruits, de tomates ; travail de huiles usagées, de sous-produits industriels, etc..

Pour procédés d'épuration industrielle, civile et de laboratoire ; par exemple : pour la dépuration des eaux d'égout ou d'écoulement industriel ou pour rendre potable les eaux.

Pour procédés d'extraction en beaucoup de secteurs (chimique, alimentaire, industriel).

En pouvant, ce séparateur, être utilisé aussi sur des mélanges à milieu gazeux et même si elles coulent d'une haute vitesse, il se prête à plusieurs possibles emplois : aspirateurs de poussière, épurateurs d'air; épurateurs de fumées et de gaz ;de fumées et de gaz d'échappement ; pour emploi civil, industriel et automobile.

Plus généralement : pour la dépuration des fumées, des brouillards, des poussières et la séparation de l'air d'autres particules qui peuvent la contaminer (bactéries, virus, pollens, acariens, etc.).

Pour la séparation de composants, à différente densité ou poids moléculaire, qui forment un mélange gazeux (vapeurs- gaz, des gaz avec un poids moléculaire différent) ; en procédés industriels, de laboratoire ou dans l'emploi civil (par ex. : extraction ou séparation, de vapeur d'un mélange gaz- vapeur ou d'un gaz lourd d'air contaminé; déshumidification, etc.).

Pour l'extraction d'un gaz, mélangé avec un autre, après la réaction du gaz avec une substance en solution pulvérisée ou nébulisée.

## Revendications

1. Séparateur centrifuge, qui peut être employé sur un flux continu de mélanges fluides à milieu liquide on gazeux,

   ➢ Un rotor (2) avec chambre de séparation (31) à section annulaire dont la surface externe est découverte. Même avec la grille (34) insérée, la chambre de séparation (31) est en communication directe avec celle d'accumulation (13) du corps conteneur (1). Dans elle la force centrifuge agit d'une manière absolument perpendiculaire à la direction du flux du mélange à traiter (sauf pendant les phases d'entrée et de sortie),en expulsant les composants à plus grande densité directement dans la chambre d'accumulation (13).
   ➢ Un corps conteneur (1) avec une chambre d'accumulation (13) incorporée, dans laquelle les composants à plus grande densité expulsés se cumulent et de laquelle ils peuvent être drainés.
   ➢ Un système de contrôle (3) configuré pour régler la pression en opposition à la force centrifuge séparatrice de façon à pouvoir limiter l'expulsion de composants à densité intermédiaire, tout en consentant la séparation de ceux-là à plus grande densité et qui permet, dans le cas d'un usage sur des liquide, des vitesse angulaire élevées.

2. Séparateur selon la revendication n°1 **caractérisé par le fait que** le susdit ROTOR (2) est constitué par :

   • Une chambre d'entrée (30)
   • Une chambre de séparation (31)
   • Une chambre de sortie (32)
   • Une chambre diaphragme (33)
   • Un couvercle supérieur (28)
   • Un couvercle inférieur (29)
   • Une grille (34)

3. Séparateur selon la revendication n°2 **caractérisé par le fait que** la susdite chambre d'entrée (30) est représentée par un espace délimité par un tronçon de cône creux (ou de coupe) dont la grande base est dirigée en haut.
   Dans le centre du couvercle supérieur (28), qui ferme en haute la chambre d'entrée (30), il y a un trou dans lequel entre, au moyen d'une jointure mobile étanche, le tube axial d'entrée (11), autour duquel la chambre (30), avec le rotor (2), tourne. En bas elle est délimitée par la paroi supérieure (38) de la chambre diaphragme (33). La surface externe, à ceinture, est ouverte et communique avec la chambre de séparation (31).

4. Séparateur selon la revendication n°2 **caractérisé par le fait que** la susdite chambre d'entrée (30) est dotée d'un certain nombre de palettes (35) disposées en étoile, penchées en arrière (par rapport au sens de rotation), légèrement courbes et , le cas échéant, avec la concavité en avant ; elles adhèrent en haut au couvercle supérieur (28), en bas à la paroi supérieure (38) de la chambre diaphragme (33).
   Ces palettes d'entrée (35) servent :

   à assurer la propulsion du mélange fluide à traiter ; à engendrer un compactage des composants à plus grande densité, pour en faciliter la migration à travers le milieu dès qu'ils arrivent dans la chambre de séparation (31).

5. Séparateur selon la revendication n°2 **caractérisé par le fait que** la susdite chambre de séparation (31) a sa section transversale en forme de couronne circulaire et ses rayons, l'interne et l'externe, restent constants le long de toute la chambre, en formant un espace en forme tubulaire.

6. Séparateur selon la revendication n°2 **caractérisé par le fait que** la susdite chambre de séparation (31) est ouverte sur sa surface externe, sauf que pour les deux surfaces à ceinture qui correspondent aux niveaux des ouvertures à ceinture permettant la communication de la chambre de séparation (31) avec celle d'entrée (30) et celle de sortie (32); le couvercle supérieur (28) et l'inférieur (29) se courbent pour revêtir ces deux aires.

7. Séparateur selon la revendication n°2 **caractérisé par le fait que** dans la susdite chambre de séparation (31) sont disposées, en étoile, un certain nombre de palettes (36) rectangulaires (ou quadrangulaires).

8. Séparateur selon la revendication n°7 **caractérisé par le fait que** les palettes (36) ont un axe qui est parallèle à celui de rotation; celui-là perpendiculaire (à l'axe de r.) est penché, par rapport au sens de rotation, en arrière; en créant, avec le rayon du plan de rotation qui passe pour leurs extrémités internes, un angle de 45°-60° environ. Ces palettes (36) sont courbées sur l'axe perpendiculaire à celui de rotation, avec la convexité orientée en avant, et avec un angle au centre de 20° environ; elles continuent par les parois latérales, longitudinales, des cellules de récolte (41) de la grille (34).

Les canaux entre les palettes de séparation (36) continuent par les cellules de récolte (41) de la grille (34). Le bord interne des palettes corresponde à la paroi tubulaire (40) de la chambre diaphragme (33). Cette paroi est fermée sauf que en correspondance de la chambre d'entrée (30) et de celle de sortie (32). Leur bord externe, si n'est pas insérée la grille (34), sauf que aux extrémités revêtues à ceinture par les deux couvercles (28) et (29), est en contact direct avec la chambre d'accumulation (13)

9. Séparateur selon la revendication n°2 **caractérisé par le fait que** la susdite chambre de sortie (32) est réalisée par les modalités suivantes :

C'est un espace partiellement fermé, délimité en haute par la paroi inférieure (39) de la chambre diaphragme (33), en bas par le couvercle inférieur (29) ; à l'extérieur elle communique avec la chambre de séparation (31). Elle est représentée par un espace délimité par un tronçon de cône creux (ou de coupe) dont la grande base est dirigée en bas.

Dans lui est logé le collecteur de sortie (7) qui continue par le tube axial de sortie (12). Le tube axial de sortie (12) passe à travers le couvercle inférieur (29), qui ferme en bas la chambre de sortie (32), par une jointure mobile étanche. Les dimensions du collecteur de sortie (7) sont telles que l'espace entre lui et la chambre de sortie (32) est virtuel, mais sans contact, de façon que le rotor (2) puisse pivoter autour de lui.

10. Séparateur selon la revendication n°2 **caractérisé par le fait que** la susdite chambre diaphragme (33) est réalisée par les modalités suivantes :

C'est un espace complètement fermé, délimité par deux tronçons de cône creux (ou de coupe) orientés au contraire, avec les petites bases l'une vers l'autre et les grandes insérées sur une unique structure tubulaire.

Sa paroi supérieure (38) délimite en bas la chambre d'entrée (30), l'inférieure (39) délimite en haut la chambre de sortie (32). L'espace entre les deux tronçons de cônes est fermé extérieurement par la paroi tubulaire (40) qui forme aussi la surface interne fermée de la chambre de séparation (31). Dans le centre de la paroi supérieure (38) est fixé l'axe (15) pour la transmission mécanique du rotor (2) ; dans le centre de la paroi inférieure (39), sur le versant interne, est fixé un roulement à billes (37) étanche dans lequel, à travers un trou de la même paroi, est enfoncé le pivot (27) du collecteur de sortie (7).

11. Séparateur selon la revendication n°2 **caractérisé par le fait que** la susdite grille (34) est réalisée par les modalités suivantes :

C'est une structure tubulaire qui ferme toute la surface externe ouverte de la chambre de séparation (31).

Dans l'épaisseur de cette structure sont creusés, parallèlement à l'axe de rotation, des canaux parallèles avec la section transversale à arc de cercle ou à demi-cercle ou à demi-ellipse, avec la courbe dirigée à l'extérieur; L'axe de la corde de la section transversale passe pour l'axe de rotation.

Ces canaux représentent une continuation, vers l'extérieur, de ceux qui se trouvent entre les palettes de séparation (36) et par suite ils sont dans le même nombre.

Ils sont subdivisés, transversalement, par un certains nombre de parois très fines en autant de cellules de récolte (41).

La paroi externe des cellules de récolte (41) peut être, selon l'usage, ou complètement ouverte, dans l'usage sur mélange à milieu gazeux, ou, dans l'usage sur mélange à milieu liquide, percée par des trous (42) circulaires dont le diamètre ne peut pas dépasser une certaine valeur, proportionnellement à la tension superficielle du milieu et à la densité totale du mélange; dans le cas où le milieu serait l'eau et la densité totale aurait augmentée peu, il sera de 8 mm environ. L'augmentation de la densité totale du mélange, s'il est suffisamment homogène, permette des diamètres plus grands.

La surface externe de la grille (34), dans l'usage sur mélange à milieu liquide, a, préférablement, section polygonale, de sorte que les trous (42) se trouvent sur une surface plane.

Dans le cas d'une limitation du nombre des palettes de séparation (36) (dans l'usage sur des mélanges, à milieu liquide, trop denses), le nombre des files longitudinales de cellules de récolte (41) sera le même des files longitudinales de trous. C'est-à-dire, la longueur de la circonférence externe de la grille (34) divisée par l'arc de cercle dont la corde corresponde au diamètre d'un trou plus deux décimillimètres environ.

La grille (34) est indispensable dans l'usage sur mélange à milieu liquide, sauf qu'on désire négliger la réduction, de la vitesse angulaire, due au frottement du rotor (2) avec le liquide qu'envahirait la chambre d'accumulation (13).

Dans l'usage sur mélange à milieu gazeux, bien qu'elle ne soit pas toujours indispensable, elle peut améliorer beaucoup le procédé de séparation.

**12.** Séparateur selon la revendication n°2 **caractérisé par le fait que** les susdits couvercle supérieur (28) et couvercle inférieur (29) sont réalisés par les modalités suivantes :

Le couvercle supérieur (28) ferme hermétiquement en haut et sans solution de continu la chambre d'entrée (30), la chambre de séparation (31), la grille (34) (quand elle est présente) et le bref trait à ceinture de la surfaces externe de la chambre de séparation (31) correspondant au niveau de la communication de cette chambre (31) avec celle d'entrée (30). Dans son trou central est logé, par une jointure mobile étanche, le tube axial d'entrée (11).
Le couvercle inférieur (29) fait la même chose, mais du bas et en fermant la chambre de sortie (32) au lieu de la chambre d'entrée (30), et le trait, en bas, de la surface externe de la chambre de séparation (31) correspondant au niveau de sa communication avec celle de sortie (32). Dans son trou central est logé, par une jointure mobile étanche, le tube axial de sortie (12).

**13.** Séparateur selon la revendication n°1 **caractérisé par le fait que** le susdit CORPS CONTENEUR (1) est formé, essentiellement, par un récipient, éventuellement, cylindrique.
Sur ses surfaces planes, excentriquement, s'insèrent : sur un versant le tuyau d'entré (4), sur l'autre le tuyau de décharge (5). Dans l'épaisseur des parois planes sont obtenus : sur le versant d'entrée le collecteur d'entré (6), dans la paroi opposée la capsule de la pompe de sortie (8) qui devient un semple collecteur de décharge (8 bis) lorsque cette pompe n'est pas utilisée (spécialement, donc, dans l'usage sur des mélanges à milieu gazeux).

**14.** Séparateur selon la revendication n°13 **caractérisé par le fait que** le collecteur d'entré (6) continue par un tube axial d'entré (11). Le rotor (2) est inséré sur le tube axial d'entrée (11), par un trou situé au centre du couvercle supérieur (28), au moyen d'une jointure mobile étanche.

**15.** Séparateur selon la revendication n°13 **caractérisé par le fait que** la capsule de la pompe de sortie (8) (ou le collecteur de décharge(8 bis)) communique avec la chambre de séparation (31) du rotor (2) au moyen d'un tube axial de sortie (12), par lequel elle continue, qui pénètre à travers le trou central du couvercle inférieur (29) dans la chambre de sortie (32). Ici le tube axiale de sortie (12) continue par le collecteur de sortie (7). Celui-ci, doté de palettes (24), est logé dans la chambre de sortie (32). Cette chambre (32), avec tout le rotor (2), peut tourner autour du collecteur de sortie (7) qui est fixe.

**16.** Séparateur selon la revendication n°14 et n°15 **caractérisé par le fait que** le tube axial d'entrée (11), le tube axial de sortie (12) et le collecteur de sortie (7) sont immobiles .Le rotor (2) tourne autour des deux tubes axiaux (11) (12 (et au collecteur de sortie (7)) grâce à des jointures mobiles étanches.

**17.** Séparateur selon la revendication n°1 et n°13 **caractérisé par le fait que** dans le susdit CORPS CONTENEUR (1) est tirée la chambre d'accumulation (13) au-dedans de laquelle pivote le rotor (2). Dans cette chambre (13) les composants à séparer du fluide sont expulsés directement pendant le passage à travers la chambre de séparation (31).

**18.** Séparateur selon la revendication n°1 **caractérisé par le fait qu'**il est prévu, le cas échéant, un SYSTÈME DE CONTRÔLE (3) qui a la possibilité de régler plusieurs paramètre (pression du gaz, volume du liquide), et activer des phénomènes (communication entre les chambres et l'extérieur, vitesse de pivotement du rotor).

**19.** Séparateur selon la revendication n°18 **caractérisé par le fait que** le susdit Système de contrôle (3) est composé par
un capteur de pression (48).

**20.** Séparateur selon la revendication n°18 **caractérisé par le fait que** le susdit Système de contrôle (3) est composé par
un détecteur de niveau du liquide (49).

**21.** Séparateur selon la revendication n°18 **caractérisé par le fait que** le susdit Système de contrôle (3) est composé par trois électrovannes, desquelles une (46) permette la sortie des gaz à l'extérieur, une autre (45) dessert la chambre d'accumulation (13) et un compresseur pour gaz, la troisième (47), apte aux liquides denses, permette le passage de liquide dans un réservoir accessoire.

**22.** Séparateur selon la revendication n°8 **caractérisé par le fait que** le susdit Système de contrôle (3) est composé par
un compresseur pour gaz (non représenté dans les dessins).

**23.** Séparateur selon la revendication n°18 **caractérisé par le fait que** le susdit Système de contrôle (3) est composé par

- un diaphragme électromécanique d'entrée (43) (ou une soupape d'entrée)

- un diaphragme électromécanique de sortie (44) (ou une soupape, dont la pression d'ouverture, dans l'usage sur mélanges à milieu liquide, soit réglable).

24. Séparateur selon la revendication n°18 **caractérisé par le fait que** le susdit Système de contrôle (3) est composé par
un réservoir (non représenté dans les dessins).

25. Séparateur selon la revendication n°18 **caractérisé par le fait que** le susdit Système de contrôle (3) est composé par un circuit électronique de contrôle (non représentée dans les dessins). Il intègre les fonctions des composants de ce système (a,b,c,d,e,f) en conservant les valeurs nécessaires de la pression gazeuse et du volume de liquide dans la chambre d'accumulation (13).
Le cas échéant une pompe axiale, un turbidimètre, un densimètre pourront compléter ce système (3).

**Claims**

1. A centrifugal separator, which may be used on a continuous flow of fluid mixtures in liquid or gaseous medium and which is formed by:

   - a rotor (2) having a separating chamber (31) of annular section, whereof the outer surface is uncovered. Even with the grating (34) inserted, the separating chamber (31) is in direct communication with the collecting chamber (13) of the containing body (1). In the former, the centrifugal force acts absolutely perpendicular to the direction of flow of the mixture to be processed (except during the phases of entry and exit), with the components of greatest density being expelled directly into the collecting chamber (13).
   - a containing body (1) having incorporated therein a collecting chamber (13) in which the expelled components of greatest density accumulate and from which they may be drained.
   - a control system (3) which is set up to regulate the pressure in opposition to the separating centrifugal force such as to enable expulsion of components of intermediate density to be limited, while allowing them to be separated from those of greatest density, and which, in the case of use on liquids, enables high angular velocity.

2. A separator according to Claim 1, **characterised in that** the above-mentioned rotor (2) is formed by:

   - an inlet chamber (30)
   - a separating chamber (31)
   - an outlet chamber (32)
   - a diaphragm chamber (33)
   - an upper cover (28)
   - a lower cover (29)
   - a grating (34).

3. A separator according to Claim 2, **characterised in that** the above-mentioned inlet chamber (30) takes the form of a space delimited by a section of a hollow cone (or cup) whereof the large base points upwards. In the centre of the upper cover (28), which upwardly closes the inlet chamber (30), there is a hole into which there passes, by means of a mobile sealed joint, the axial inlet tube (11), around which rotates the chamber (30), with the rotor (2). This chamber is delimited at the bottom by the upper wall (38) of the diaphragm chamber (33). The outer surface, which acts like a belt, is open and communicates with the separating chamber (31).

4. A separator according to Claim 2, **characterised in that** the above-mentioned inlet chamber (30) is provided with a number of paddles (35) which are arranged in the shape of a star, inclined backwards (in relation to the direction of rotation) and slightly curved and, where appropriate, have their concave side forwards; the paddles are connected at the top to the upper cover (28) and at the bottom to the upper wall (38) of the diaphragm chamber (33). These inlet paddles (35) serve:

   to ensure that the fluid mixture to be processed is propelled; to bring about compaction of the components of greatest density, in order to make it easier for them to migrate through the medium as soon as they reach the separating chamber (31).

5. A separator according to Claim 2, **characterised in that** the cross section of the above-mentioned separating chamber (31) is in the shape of a circular ring and its radii, both internal and external, remain constant throughout the chamber, forming a space which is tubular in shape.

6. A separator according to Claim 2, **characterised in that** the above-mentioned separating chamber (31) is open on its outer surface, apart from the two surfaces which act as a belt, which meet at the openings which act as a belt, enabling the separating chamber (31) to communicate with the inlet chamber (30) and the outlet chamber (32); the upper cover (28) and the lower cover (29) are curved to cover these two areas.

7. A separator according to Claim 2, **characterised in that** there are arranged in the shape of a star in the above-mentioned separating chamber (31) a number of rectangular (or four-sided) paddles (36).

8. A separator according to Claim 7, **characterised in that** the paddles (36) have an axis parallel to the axis of rotation; the perpendicular one (the one perpendicular to the axis of rotation) is inclined backwards in relation to the direction of rotation; this creates an angle of approximately 45° - 60° with the radius of the plane of rotation passing through their inner ends. These paddles (36) are curved on the axis perpendicular to the axis of rotation, with the convex side oriented forwards, and with an angle of approximately 20° to the centre; they are continued by the longitudinal side walls of the collecting cells (41) of the grating (34).

   The channels between the separating paddles (36) are continued by the collecting cells (41) of the grating (34).

   The inner edge of the paddles meets the tubular wall (40) of the diaphragm chamber (33). This wall is closed, apart from where it meets the inlet chamber (30) and the outlet chamber (32).

   Their outer edge, where it is not inserted in the grating (34), except at the ends covered in the manner of a belt by the two covers (28) and (29), is in direct contact with the collecting chamber (13).

9. A separator according to Claim 2, **characterised in that** the above-mentioned outlet chamber (32) is formed by the following constructions:

   It is a partly closed space delimited at the top by the lower wall (39) of the diaphragm chamber (33) and at the bottom by the lower cover (29); it communicates to the outside with the separating chamber (31). It is formed by a space delimited by a section of a hollow cone (or cup) whereof the large base points downwards.

   Accommodated therein is the outlet collector (7), which is continued by the axial outlet tube (12). The axial outlet tube (12) passes through the lower cover (29), which downwardly closes the outlet chamber (32) by means of a mobile sealed joint. The dimensions of the outlet collector (7) are such that the space between it and the outlet chamber (32) is virtual but not in contact, such that the rotor (2) can pivot about it.

10. A separator according to Claim 2, **characterised in that** the above-mentioned diaphragm chamber (33) is formed by the following constructions:

    It is a completely enclosed space delimited by two sections of a hollow cone (or cup) which are oriented in opposite directions, with the small bases towards one another and the large bases inserted inside a single tubular structure. Its upper wall (38) delimits the bottom of the inlet chamber (30) and the lower wall (39) delimits the top of the outlet chamber (32). The space between the two sections of cone is closed off from the outside by the tubular wall (40), which also forms the closed inner surface of the separating chamber (31). In the centre of upper wall (38) there is fixed the shaft (15) for mechanical transmission of the rotor (2); in the centre of the lower wall (39), on the inner face, there is fixed a sealed ball bearing (37) into which there is embedded, by way of a hole in the same wall, the spigot (27) of the outlet collector (7).

11. A separator according to Claim 2, **characterised in that** the above-mentioned grating (34) is formed by the following constructions:

    It is a tubular structure which encloses the entire open outer surface of the separating chamber (31). In the thickness of this structure there are made, parallel to the axis of rotation, parallel channels whereof the cross section is a circular or semicircular or semi-elliptical arc, with the curve pointing outwards; the axis of the chord of the cross section passes through the axis of rotation.

    These channels represent a continuation towards the outside of those between the separating paddles (36) and consequently there are the same number of them.

    They are subdivided transversely by a number of very fine walls and the same number of collecting cells (41).

    The outer wall of the collecting cells (41) may, depending on the use, either be completely open, when used on a mixture of gaseous medium, or, when used on a mixture of liquid medium, be pierced by circular holes (42) whereof the diameter must not exceed a certain value proportionate to the surface tension of the medium and the overall density of the mixture; where the medium is water and the overall density has increased slightly, this will be approximately 8 mm.

    An increase in the overall density of the mixture, if it is sufficiently homogeneous, allows larger diameters.

    The outer surface of the grating (34), when used on a mixture of liquid medium, is preferably polygonal in section, such that the holes (42) are on a planar surface.

    If the number of separating paddles (36) is limited (when used on mixtures of liquid medium which are too dense), the number of longitudinal rows of collecting cells (41) will be the same as that of the longitudinal rows of holes.

    That is, the length of the external circumference of the grating (34) divided by the circular arc whereof the chord corresponds to the diameter of a hole, plus approximately two tenths of a millimetre.

The grating (34) is indispensable when used on a mixture of liquid medium, except when the reduction in angular velocity, due to friction between the rotor (2) and the liquid which invades the collecting chamber (13), is to be ignored.

When used on a mixture of gaseous medium, although it is not always indispensable it may bring about a considerable improvement in the separating procedure.

12. A separator according to Claim 2, **characterised in that** the above-mentioned upper cover (28) and lower cover (29) are formed by the following constructions:

The upper cover (28) hermetically closes off, upwardly and without any discontinuity, the inlet chamber (30), the separating chamber (31), the grating (34) (where present) and the short line serving as a belt of the outer surface of the separating chamber (31), which meets the point at which this chamber (31) communicates with the inlet chamber (30). The axial inlet tube (11) is accommodated in the central hole therein by means of a mobile sealed joint.

The lower cover (29) does the same thing, but downwardly and closing off the outlet chamber (32) instead of the inlet chamber (30) and the downward line of the outer surface of the separating chamber (31) which meets the point at which this chamber (31) communicates with the outlet chamber (32). The axial outlet tube (12) is accommodated in the central hole therein by means of a mobile sealed joint.

13. A separator according to Claim 1, **characterised in that** the above-mentioned containing body (1) is substantially formed by a receptacle which may possibly be cylindrical.

The following are inserted eccentrically at its planar surfaces: the inlet tube (4) is on one face and the discharge tube (5) on the other. The following are provided in the thickness of the planar walls: the inlet collector (6) is on the inlet face, and the outlet pump assembly (8) is in the opposite wall and becomes a simple discharge collector (8bis) when this pump is not used (in particular therefore when used on mixtures of gaseous medium).

14. A separator according to Claim 13, **characterised in that** the inlet collector (6) is continued by an axial inlet tube (11).

The rotor (2) is inserted in the axial inlet tube (11) through a hole located in the centre of the upper cover (28), by means of a mobile sealed joint.

15. A separator according to Claim 13, **characterised**

**in that** the outlet pump assembly (8) (or the discharge collector (8bis)) communicates with the separating chamber (31) of the rotor (2) by means of an axial outlet tube (12), and by means of this is continued and penetrates through the central hole in the lower cover (29) and into the outlet chamber (32). At this point, the axial outlet tube (12) is continued by the outlet collector (7). The latter, which is provided with paddles (24), is accommodated in the outlet chamber (32). This chamber (32), together with the whole rotor (2), may rotate about the outlet collector (7), which is fixed.

16. A separator according to Claims 14 and 15, **characterised in that** the axial inlet tube (11), the axial outlet tube (12) and the outlet collector (7) are immobile. The rotor (2) rotates about the two axial tubes (11) (12) (and the outlet collector (7)) by means of mobile sealed joints.

17. A separator according to Claims 1 and 13, **characterised in that** the collecting chamber (13) is drawn into the above-mentioned containing body (1), and the rotor (2) pivots within the former.

The components of the fluid to be separated are expelled directly into this chamber (13) during passage through the separating chamber (31).

18. A separator according to Claim 1, **characterised in that** where appropriate a control system (3) is provided, which is capable of regulating a plurality of parameters (gas pressure, liquid volume) and activating operations (communication between the chambers and the outside, speed of pivoting of the rotor).

19. A separator according to Claim 18, **characterised in that** the above-mentioned control system (3) comprises a pressure sensor (48).

20. A separator according to Claim 18, **characterised in that** the above-mentioned control system (3) comprises a liquid level detector (49).

21. A separator according to Claim 18, **characterised in that** the above-mentioned control system (3) comprises three electrical valves, whereof one (46) allows gases to exit to the outside, another (45) acts on the collecting chamber (13) and a gas compressor, and the third (47), which is suitable for dense liquids, allows liquid to pass into an auxiliary reservoir.

22. A separator according to Claim 18, **characterised in that** the above-mentioned control system (3) comprises a gas compressor (not illustrated in the drawings).

**23.** A separator according to Claim 18, **characterised in that** the above-mentioned control system (3) comprises:

- an electromechanical inlet diaphragm (43) (or an inlet valve)
- an electromechanical outlet diaphragm (44) (or a valve, whereof the opening pressure, when used on mixtures of liquid medium, is regulable).

**24.** A separator according to Claim 18, **characterised in that** the above-mentioned control system (3) comprises a reservoir (not illustrated in the drawings).

**25.** A separator according to Claim 18, **characterised in that** the above-mentioned control system (3) comprises an electronic control circuit (not illustrated in the drawings). It brings together the functions of components of this system (a, b, c, d, e, f) while maintaining the required values of gas pressure and liquid volume in the collecting chamber (13).

Where necessary, an axial pump, a turbidimeter and a densimeter may complete this system (3).


**Patentansprüche**

**1.** Zentrifugal-Separator zur Verwendung an einer kontinuierlichen Strömung von Strömungsmittelgemischen in flüssigem oder gasförmigem Medium, bestehend aus:

- einem Rotor (2) mit einer Separier- bzw. Trennkammer (31) von ringförmigem Querschnitt, deren Außenfläche frei ist. Selbst bei eingesetztem Gitter (34) steht die Separier-bzw. Trennkammer (31) in direkter Verbindung mit der Sammelkammer (13) des Behälterkörpers (1). In der Separier- bzw.Trennkammer wirkt die Zentrifugalkraft in einer zur Strömungsrichtung des zu behandelnden Gemischs absolut rechtwinkligen Weise ausgenommen die Eintritts- und Austrittsphasen) unter Verdrängung bzw. Ausstoßung der Bestandteile größerer Dichte direkt in die Sammelkammer (13).
- einem Behälterkörper (1) mit einer in diesem enthaltenen Sammelkammer (13), in welchem die verdrängten bzw. ausgestoßenen Bestandteile höherer Dichte sich ansammeln und aus welcher sie abgezogen werden können.
- einem Kontroll- bzw. Steuersystem (3) in Ausbildung zum Regeln bzw. Einstellen des der trennenden Zentrifugalkraft entgegengesetzten Drucks, zur Begrenzung der Verdrängung bzw. Ausstoßung von Bestandteilen mittlerer Dichte, bei gleichzeitiger Gestattung der Abtrennung der Bestandteile höherer Dichte, was bei Anwendung auf Flüssigkeiten erhöhte Winkelgeschwindigkeiten gestattet.

**2.** Separator nach Anspruch No.1, **dadurch gekennzeichnet, daß** der genannte Rotor (2) besteht aus:

- einer Eintrittskammer (30)
- einer Separier-bzw. Trennkammer (31)
- einer Austrittskammer (32)
- einer Diaphragma-bzw. Scheidekammer (33)
- einer oberen Deckwandung (28)
- einer unteren Deckwandung (29)
- einem Gitter (34)

**3.** Separator nach Anspruch No. 2, **dadurch gekennzeichnet, daß** die genannte Eintrittskammer (30) sich als ein durch einen hohlen Kegelstumpfkörper begrenzter Raum darstellt, dessen große Grundfläche nach oben gerichtet ist.

In der Mitte der oberen Deckwandung (28), welche die Eintrittskammer (30) nach oben abschließt, befindet sich eine Öffnung, in welche vermittels einer beweglichen Dichtung das achsiale Eintrittsrohr (11) eingreift, um welches die Kammer (30) mit dem Rotor (2) rotiert. Nach unten ist sie, die Eintritts-kammer (30) durch die obere Wandung (38) der Diaphragma-bzw. Scheidekammer (33) begrenzt. Die gürtelartig umschließende Außenfläche ist offen und steht mit der Separier-bzw. Trennkammer (31) in Verbindung.

**4.** Separator nach Anspruch 2, **dadurch gekennzeichnet, daß** die Eintrittskammer (30) mit einer gewissen Zahl von sternförmig angeordneten Schaufeln (35) versehen ist, die (relativ bezogen auf die Rotationsrichtung) nach hinten geneigt sind und leicht gekrümmt bzw. gebogen und gegebenenfalls mit ihrer konkaven Seite nach vorne zeigen; sie liegen oben gegen die obere Deckwandung (28) und unten gegen die obere Wandung (38) der Diaphragma- bzw. Scheidekammer (33) an.

Diese Eingangsschaufeln (35) dienen dazu: den Vorschubantrieb des zu behandelnden Strömungsgemischs zu gewährleisten; eine Kompaktierung der Bestandteile höherer Dichte zu veranlassen, um deren Wanderung durch das Medium zu erleichtern, sobald sie die Separier-bzw. Trennkammer (31) erreichen.

**5.** Separator nach dem Patentanspruch No. 2 , **dadurch gekennzeichnet, daß** die genannte Separier- bzw. Trennkammer (31) im Querschnitt in Form einer kreisförmigen Krone ausgebildet ist, deren Radien, und zwar Innen- und Außenradien, entlang der gesamten Kammer konstant verbleiben, unter Bildung eines rohrförmigen Körpers.

**6.** Separator nach Anspruch No. 2, **dadurch gekennzeichnet, daß** die genannte Separier-bzw. Trennkammer (31) an ihrer Außenfläche offen ist, ausgenommen die beiden gürtelartig umschließenden Flächen, welche den Niveaus der gürtelartig umschließenden Öffnungen entsprechen, welche die Kommunikation der Separier-bzw. Trennkammer (31) mit der Eintrittskammer (30) und mit der Austrittskammer (32) gestatten; die obere Deckwandung (28) und die untere Deckwandung (29) sind gekrümmt, um diese beiden Bereiche zu bedecken.

7. Separator nach Anspruch 2, **dadurch gekennzeichnet, daß** in der genannten Separier-bzw. Trennkammer (31) in sternförmiger Anordnung eine gewisse Zahl von rechtwinkligen (oder viereckigen) Schaufeln (36) vorgesehen sind.

8. Separator nach Anspruch 7, **dadurch gekennzeichnet, daß** die Schaufeln (36) eine zur Rotationsachse parallele Achse besitzen; die zur Rotationsachse rechtwinklige Achse ist relativ bezüglich der Rotationsrichtung nach hinten geneigt; derart daß sie mit dem durch ihre beiden Innenenden gehenden Radius der Rotationsachse einen Winkel von ca. 45° bis 60° bildet. Diese Schaufeln (36) sind gegenüber der zur Rotatiosachse rechtwinkligen Achse gekrümmt, wobei die Konvexität nach vorne gerichtet ist, und mit einem Winkel zum Zentrum von etwa 20°; diese Schaufeln bilden mit ihren länglichen Seitenwandungen Fortsetzungen der Ausstoß-bzw. Entnahmezellenm (41) des Gittera (34).

   Die Kanäle zwischen den Separier-bzw. Trennschaufeln (36) werden durch die Ausstoß-bzw. Entnahmezellen (41) des Gitters (34) fortgesetzt. Der Innenrand der Schaufeln entspricht der rohrförmigen Wandung (40) der Diaphragma- bzw. ScheideKammer (33).

   Diese Wandung ist geschlossen, mit Ausnahme der Entsprechungen der Eintrittskammer (30) und der Austrittskammer (32). Ihr äußerer Rand ist im nichteingesetzten Zustand des Gitters (34), ausgenommen an den durch die beiden Deckwandungen (28) und (29) gürtelartig eingeschlossenen Enden, in direktem Kontakt mit der Sammelkammer (13).

9. Separator nach Anspruch No. 2, **dadurch gekennzeichnet, daß** die genannte Austrittskammer (32) gemäß den folgenden Modalitäten ausgestattet ist:

   Es handelt sich um einen teilweise geschlossenen Raum, der oben durch die untere Wandung (39) der Diaphragma- bzw. Scheidekammer, an der Unterseite durch die untere Deckwandung (29) begrenzt ist; an der Außenseite steht sie mit der Separier-bzw. Trennkammer (31) in Verbindung. Sie stellt sich dar als ein Raum, der durch einen hohlen kegelstumpfförmigen Körper begrenzt ist, dessen große Grundfläche nach unten gerichtet ist.

   In diesem Raum ist die Austrittssammelkammer (7) untergebracht, welche sich in dem axialen Austrittsrohr (12) fortsetzt. Dieses axiale Austrittsrohr (12) durchsetzt die untere Deckwandung (29), welche die Austrittskammer (32) unten abschließt, vermittels einer beweglichen Dichtung. Die Abmessungen der Austrittssammelkammer (7) sind solcher Art, daß der Raum zwischen ihr und der Austrittskammer (32) virtuell ist aber ohne Kontakt, derart daß der Rotor (2) um ihn rotieren kann.

10. Separator nach Anspruch No. 2, **dadurch gekennzeichnet, daß** die genannte Diaphragma-bzw. Scheidekammer (33) gemäß den folgenden Modalitäten ausgestaltet ist:

    Es ist ein vollständig geschlossener Raum, der durch zwei gegeneinander gerichtete hohle Kegelstumpfkörper begrenzt wird, die mit ihren kleinen Grundflächen gegeneinander anliegen und deren große Grundflächen in ein einstückiges rohrförmiges Gebilde eingesetzt sind. Seine obere Wandung (38) begrenzt die Eintrittskammer (30), die untere Wandung (39) begrenzt die Austrittskammer (32) nach oben. Der Raum zwischen den beiden Kegelstümpfen ist nach außen durch die Rohrwandung (40) geschlossen, welche auch die geschlossene Innenwandung der Separier-bzw. Trennkammer (31) bildet. In der Mitte der oberen Wandung (38) ist die Achse bzw, Welle (15) für den mechanischen Antrieb des Rotors (2) befestigt; in der Mitte der unteren Wandung (39) ist an der Innenseite ein dicht schließendes Kugellager (37) befestigt, in welches, durch eine Öffnung in derselben Wandung, der Drehzapfen (27) der Austrittssammelkammer (7) eingreift.

11. Separator nach Anspruch 2, **dadurch gekennzeichnet, daß** das genannte Gitter (34) gemäß den folgenden Modalitäten ausgestaltet ist: Es ist ein rohrförmiges Gebilde, welches die gesamte offene Außenfläche der Separier- bzw. Trennkammer (31) abschließt. In der Dickenerstreckung dieses Gebildes sind, parallel zur Rotationsachse, parallele Kanäle ausgehöhlt, mit kreisbogenförmigem oder halbkreisbogenförmigem oder halbellipsoidischem Querschnitt, wobei die Krümmung nach außen gerichtet ist. Die Achse der Querschnittsssehne gilt als Rotationsachse. Diese Kanäle bilden eine äußere Fortsetzung der Kanäle, welche sich zwischen den Separier- bzw. Trenn-Schaufeln (36) befinden, und demzufolge liegen sie in der gleichen Zahl wie diese vor.

    Sie sind transversal durch eine gewisse Anzahl sehr feiner dünner Wandungen unterteilt, in ebenso viele Ausstoß-bzw. Entnahmezellen (41).

    Die Außenwandung der Ausstoß- bzw. Entnahmezellen (41) ist je nach der Anwendung entweder vollständig offen, bei Anwendung an einem Gemisch in gasförmigem Medium,

oder

    - bei Anwendung an einem Gemisch in flüssigem Medium

    - mit kreisförmigen Löchern (42) versehen, deren Durchmesser einen bestimmten Wert nicht übersteigen darf, proportional zur Oberflächenspannung des Mediums und zur Gesamtdichte des Gemischs; falls das Milieu bzw. Medium Wasser wäre und die Gesamtdichte ein wenig erhöht, beträgt der Durchmesser ungefähr 8 mm.

Die Erhöhung der Gesamtdichte des Gemischs, wenn es hinreichend homogen ist,
gestattet größere Durchmesser.

Die Außenfläche des Gitters (34), bei Anwendung an einem Gemisch in flüssigem Milieu, besitzt vorzugsweise einen polygonalen Querschnitt, derart, daß die Löcher (42) sich auf einer ebenen Fläche befinden.

Im Fall einer Begrenzung der Zahl der Separier- bzw.Trennschaufeln (36) (bei Anwendung an zu dichten Gemischen in flüssigem Medium) wird die Anzahl von Längsreihen von Ausstoß- bzw. Entnahmezellen (41) gleich der Anzahl von Längsreihen von Löchern. D.h.

die Länge des Außenumfangs des Gitters (34) geteilt durch den Kreisbogen, dessen Sehne dem Durchmesser eines Lochs plus etwa 2 Dezi mm entspricht.

Das Gitter (34) ist unerläßlich bei Verwendung an einem Gemisch in flüssigem Medium, es sei denn man möchte die Reduktion der Winkelgeschwindigkeit vernachlässigen, die durch Reibung des Rotors (2) mit der Flüssigkeit bedingt ist, welche die Sammelkammer (13) beeinträchtigen würde.

Bei Anwendung mit einem Gemisch in gasförmigem Medium ist das Gitter zwar nicht immer unerläßlich, jedoch kann es das Separier- bzw. Trennverfahren erheblich verbessern.

12. Separator nach Anspruch No. 2, **dadurch gekennzeichnet, daß** die genannte obere Deckwandung bzw. der obere Deckel (28) und die genannte untere Deckwandung bzw. untere Deckel (29) gemäß den folgenden Modalitäten ausgestaltet sind:

Die obere Deckwandung (bzw. der obere Deckel) (28) schließt hermetisch und ohne Aufhebung des Zusammenhangs die Eintrittskammer (30), die Separier- bzw. Trennkammer

(31), das Gitter (34) (falls es vorhanden ist), und den kurzen gürtelartigen Abschnitt der Außenfläche der Separier- bzw.Trennkammer (31) entsprechend dem Niveau seiner Verbindung mit der Austrittskammer (32). In ihrer Mittelöffnung ist mittels einer drehbar beweglichen Dichtung das achsiale Austrittsrohr (12) untergebracht.

13. Separator nach dem Anspruch No. 1, **dadurch gekennzeichnet, daß** der genannte Behälterkörper (1) im wesentlichen von einem gegebenenfalls zylindrischen Behälter gebildet wird.

An seinen ebenen Flächen befinden sich in exzentrischer Anordnung auf einer Seite die Eintrittsleitung (4), auf der anderen Seite die Austritts- bzw. Abflußleitung (5). In der Wandstärke der ebenen Wandungen sind auf der Eingangsseite die Eintrittskammer (6) untergebracht, in der gegenüberliegenden Wandung die Kapsel der Ausgangspumpe (8), welche bei Nicht-Benutzung dieser Pumpe eine bloße Austrittssammelkammer (8 bis) wird (insbesondere daher bei Anwendung an Gemischen in gasförmigem Medium).

14. Separator nach Anspruch No. 1, **dadurch gekennzeichnet, daß** sich die Eintrittssammelkammer (6) in einem achsialen Eintrittsrohr (11) fortsetzt. Der Rotor (2) wird auf dem achsialen Eintrittsrohr (11) eingesetzt, durch eine in der Mitte der oberen Deckwanduing (28) befindliche Öffnung, mittels einer drehbar-beweglichen Dichtung.

15. Separator nach Anspruch No. 13, **dadurch gekennzeichnet, daß** die Kapsel der Austrittspumpe (8) (oder die Abfluß-Sammelkammer (8 bis) mit der Separier- bzw. Trennkammer (31) des Rotors (2) mittels eines achsialen Austrittsrohrs (12), in welchem sie sich fortsetzt und das die Mittelöffnung der unteren Deckwandung (29) in der Austrittskammer (32) durchsetzt. Hier bildet das achsiale Austrittsrohr (12) die Fortsetzung der Austritts- Sammelkammer (7) Diese mit Schaufeln (24) versehene Austritts-Sammelkammer ist in der Austrittskammer (32) untergebracht. Diese Kammer (32) ist mit dem ganzen Rotor (2) um die feststehende Austritts-Sammelkammer (7) drehbar.

16. Separator nach Anspruch No. 14 und No. 15, dadurch gekennzteichnet daß das achsiale Eintrittsrohr (11), das achsiale Austrittsrohr (12), und die Austritts-Sammelkammer (7) feststehend angeordnet sind. Der Rotor (2) ist um die beiden achsialen Rohre (11) (12) (und um die Austritts-Sammelkammer (7) drehbar, dank drehbar-beweglicher Dichtungen.

17. Separator nach dem Anspruch No. 1 und No. 13, **dadurch gekennzeichnet, daß** in dem genannten Behälterkörper (1) sich die Sammelkammer (13) befindet, innerhalb welcher der Rotor (2) umläuft. In diese Kammer (13) werden die aus dem Strömungsmittel abzutrennenden Bestandteile während des Durchgangs durch die Separier- bzw. Trennkammer (31) direkt ausgestoßen.

18. Separator nach Anspruch No.1, **dadurch gekenn-**

**zeichnet, daß** er gegebenenfalls mit einem Kontroll- bzw. Steuersystem (3) versehen ist, das die Möglichkeit mehrere Parameter (Gasdruck, Flüssigkeitsvolunmen) zu regeln bzw. einzustellen bietet und Phänomene (Kommunikation zwischen den Kammern und dem Äußeren, Drehgeschwindigkeit bzw. Drehzahl des Rotors) zu aktivieren.

19. Separator nach Anspruch No. 18, **dadurch gekennzeichnet, daß** das genannte Kontroll- bzw. Steuersystem (3) von einem Druck-Meßfühler bzw.-Meßwertgeber (48) gebildet wird.

20. Separator nach Anspruch No. 18, **dadurch gekennzeichnet, daß** das genannte Kontroll- bzw. Steuersystem (3) von einem Flüssigkeitsniveau-Detektor (49) gebildet wird.

21. Separator nach Anspruch No. 18, **dadurch gekennzeichnet, daß** das genannte Kontroll- bzw. Steuersystem (3) von drei Elektroschützen bzw. -ventilen gebildet wird, von welchen eines (46) den Austritt von Gasen nach außen gestattet, ein anderes (45) die Sammelkammer (13) und einen Gaskompressor bedient, das dritte (47), für Flüssigkeiten höherer Dichte geeignete den Flüssigkeits- Durchtritt in einen Zusatzbehälter gestattet.

22. Separator nach Anspruch No. 18, **dadurch gekennzeichnet, daß** das genannte Kontroll- bzw. Steuersystem (3) von einem (in der Zeichnung nicht dargestellten) Gaskompressor gebildet wird.

23. Separator nach Anspruch No. 18, **dadurch gekennzeichnet, daß** das genannte Kontroll- bzw. Steuersystem (3) gebildet wird durch:

   - ein elektromechanisches Eintrittsdiaphragma (43) (oder ein Eintrittsventil)
   - ein elektromechanisches Austrittsdiaphragma (44) (oder ein Ventil, dessen Öffnungsdruck, bei Verwendung an Gemischen in flüssigem Medium regelbar bzw. einstellbar ist).

24. Separator nach Anspruch No. 18, **dadurch gekennzeichnet, daß** das genannte Kontroll- bzw. Steuersystem (3) durch ein (in der Zeichnung nicht dargestelltes) Reservoir bzw. Vorratsbehälter gebildet wird.

25. Separator nach Anspruch No. 18, **dadurch gekennzeichnet daß** das genannte Kontroll- bzw. Steuersystem von einer (in der Zeichnung nicht dargestellten) elektronischen Steuerschaltung gebildet wird. Sie vereinigt die Funktionen der Bestandteile dieses Systems (a,b,c,d,e,f) unter Aufrechterhaltung der erforderlichen Werte des Gasdrucks und des Flüssigkeitsvolumens in der Sammelkammer (13). Gegebenenfalls können eine Axialpumpe, ein Turbimeter (bzw. Trübungsmeter), ein Densimeter (Dichtemesser) dieses System (3) vervollständigen.

FIG.2

FIG.1

EP 1 763 402 B1

FIG.4

FIG.3

FIG.5

FIG.6

FIG.7

FIG.8

FIG.9

FIG.10

**RÉFÉRENCES CITÉES DANS LA DESCRIPTION**

**Documents brevets cités dans la description**

- DE 10035055 A1
- DE 10035055
- WO 2004050255 A2